# EUROPEAN PATENT APPLICATION

(11) **EP 4 335 681 A1**
(43) Date of publication of application: **13.03.2024**
(21) Application number: 21940253.4
(22) Date of filing: 21.05.2021
(51) Int. Cl.: B60L 3/04

(54) **POWER DISTRIBUTION DEVICE, VEHICLE, AND FAULT PROCESSING METHOD**

(71) Applicant: Huawei Technologies Co., Ltd., Shenzhen, Guangdong 518129 (CN)
(72) Inventor: ZHANG, Guofang, Shenzhen, Guangdong 518129 (CN); LI, Fan, Shenzhen, Guangdong 518129 (CN); WANG, Quanwu, Shenzhen, Guangdong 518129 (CN)
(74) Representative: Pfenning, Meinig & Partner mbB
(86) International application number: PCT/CN2021/095352
(87) International publication number: WO 2022/241800

(57) **Abstract**

This application relates to the field of new energy vehicle technologies of an electric vehicle, and in particular, to a power distribution apparatus, including: a bus, where the bus includes a first terminal and a second terminal. A branch line is connected between the first terminal and the second terminal of the bus, and the branch line is used to connect to a load. The first terminal of the bus is used to connect to a battery, and the second terminal is used to connect to a second power supply apparatus. The first terminal of the bus is connected to a first circuit protection module in series. The first circuit protection module is configured to: when one of circuits on two sides of the first circuit protection module has an electrical fault, enter in a state in which the circuit on the electrical fault side is not connected to a circuit on the other side. Correspondingly, a vehicle on which the power distribution apparatus is mounted and a fault processing method based on the power distribution apparatus are further provided. By using technical solutions of this application, power distribution of a low-voltage power supply system at a low cost can meet high availability and high safety requirements for operation under faults.

## Description

### TECHNICAL FIELD

This application relates to the field of new energy vehicle technologies of an electric vehicle, and also relates to the field of battery management technologies, and in particular, to a power distribution apparatus, a vehicle having the power distribution apparatus, and a fault processing method based on the power distribution apparatus.

### BACKGROUND

In recent years, with the rapid development of intelligent driving technologies, intelligent driving vehicles have rapidly entered thousands of households. The vehicles have gradually developed from an original pure manual driving mode to an assisted driving or autonomous driving mode. Automation levels of autonomous driving include L1 driving assistance, L2 partial automation, L3 conditional automation, L4 high automation, and L5 full automation.

At the L1 and L2 levels, a driver is not allowed to drive without using hands, at a level higher than L2+, the driver is allowed to drive without using hands, and at a level higher than L3, the driver is allowed to drive without using hands and eyes, and even the driver does not need to pay attention to a driving status of the vehicle. It can be learned from the foregoing that, with the development of autonomous driving levels, new challenges and requirements are posed on the design of an entire vehicle system. This not only needs to meet safety in a faulty state, but also needs to meet operability in a faulty state, that is, operation under faults (Fail-Operational) described below.

For example, an electronic steering/braking system not only needs to meet high safety of electronic steering/braking in an intelligent driving condition, but also needs to meet high safety and high availability requirements of operation under faults, to avoid an excessively high requirement for manual steering/braking force caused by loss of electronic steering/braking assistance, and avoid loss of control over the vehicle caused by a failure of timely steering or braking.

For another example, during operation of the autonomous driving system, when the vehicle is in an autonomous driving condition, because the driver cannot operate the vehicle in a timely manner as in a manual driving mode, to ensure driving safety, the autonomous driving system/advanced driver-assistance system (Automated Driving system/Advanced driver-assistance system, ADS/ADAS) needs to meet high safety and high availability requirements for operation under faults, so as to avoid loss of control over the vehicle caused by a failure of the intelligent driving system.

For another example, as the weight of the vehicle (for example, the weight of a vehicle body and the weight of a power battery) gradually increases and future steer-by-wire and brake-by-wire technologies gradually apply, the development of redundant steer-by-wire/brake-by-wire technologies also needs to meet high safety and high availability requirements for operation under faults, so as to avoid loss of horizontal control over the vehicle caused by a failure of a steer-by-wire system.

In addition, to meet the high availability and high safety requirements listed above for the "operation under faults", a low-voltage power supply system (such as a 12 V power supply system or a 24 V power supply system) that supplies power to the foregoing vehicle also needs to meet the high availability and high safety requirements for operation under faults. Therefore, under the high availability and high safety requirements, how to implement power distribution of the low-voltage power supply system is a technical problem to be resolved in this application.

### SUMMARY

In view of the foregoing problems in the conventional technology, this application provides a power distribution apparatus, a vehicle having the power distribution apparatus, and a fault processing method based on the power distribution apparatus, so that power distribution of a low-voltage power supply system at a low cost can meet high availability and high safety requirements for operation under faults.

To achieve the foregoing objective, a first aspect of this application provides a power distribution apparatus, including a bus, where the bus includes a first terminal and a second terminal, a branch line is disposed between the first terminal and the second terminal of the bus, and the branch line is configured to connect a load;
the first terminal of the bus is configured to connect to a battery, and the second terminal is configured to connect to a second power supply apparatus;
the first terminal of the bus is connected to a first circuit protection module in series; and
the first circuit protection module is configured to: when one of circuits on two sides of the first circuit protection module has an electrical fault, enter in a state in which the circuit on the electrical fault side is not connected to a circuit on the other side.

Based on the above, when the power distribution apparatus in this application is applied, the first circuit protection module is added, and a battery is configured, so that when a circuit on one side of the first circuit protection module has an electrical fault, for example, a fault such as over/under-voltage or over-current, the faulty side is not connected to the other side, so as to avoid impact of the circuit on the faulty side on the other side, and meet a requirement of supporting operation under faults. In addition, use of a single battery also reduces an overall cost of the low-voltage power supply system.

In a possible implementation of the first aspect, the first circuit protection module is specifically configured to: when a circuit on a battery side of the first circuit protection module has an electrical fault, enter in a state in which the circuit on the battery side is not connected to a circuit on a bus side.

Based on the above, by using the configuration of the first circuit protection module, when a circuit on one side that is of the first circuit protection module and that is connected to the battery has an electrical fault, for example, the circuit on the side has a fault such as over/under-voltage or over-current, impact of the circuit on the battery side on the bus is avoided by using a state in which the battery side of the first circuit protection module is not connected to the bus side. In this case, a second power supply apparatus may be used to supply power, so as to meet a requirement of supporting operation under faults.

In a possible implementation of the first aspect, the first circuit protection module is specifically configured to: when a battery state in a circuit on a battery side of the first circuit protection module is abnormal, enter in a state in which the circuit on the battery side is not connected to a circuit on a bus side.

Based on the above, by using the configuration, on the premise that the power distribution apparatus is connected to one battery, when the battery state is abnormal, the bus and the battery may be in an open-circuit state, so as to avoid impact of a battery-side fault on the bus and meet a safety requirement for operation under faults. The abnormal battery state herein includes abnormal cases such as low-voltage or under-voltage of the battery, over-current/short-circuit of the battery, intermittent, discontinuous, or even open-circuit of a battery output voltage, expiration of a battery life or capacity attenuation, a charging failure, and high temperature.

In a possible implementation of the first aspect, the first circuit protection module is specifically configured to: when a circuit on a bus side of the first circuit protection module has an electrical fault, enter in a state in which the circuit on the bus side is not connected to a circuit on a battery side.

Based on the above, by using the configuration, on the premise that the power distribution apparatus is connected to one battery, when the bus side has an electrical fault, such as over/under-voltage, over-current, or electric leakage, the bus and the battery may be in an open-circuit state, so as to avoid impact of the bus fault on the battery and meet a safety requirement for operation under faults.

In a possible implementation of the first aspect, the bus is a parallel two-way bus, and the first terminal of each way of the bus is connected to the first circuit protection module in series; and the first circuit protection module on the two-way bus is specifically configured to: when the circuit on the battery side of the first circuit protection module on the two-way bus has an electrical fault or the battery state is abnormal, enter in a state in which the circuit on the battery side is not connected to the circuit on the bus side.

Based on the above, a dual-bus structure is used. This further implements redundancy of power supply and further meets a high safety power supply requirement for operation under faults. In addition, the first circuit protection module is disposed on each way of the bus, so that when the battery side has an electrical fault, circuits on two bus sides are not affected, thereby meeting a high safety power supply requirement for operation under faults.

In a possible implementation of the first aspect, the first circuit protection module on a first-way bus of the two-way bus is further specifically configured to: when a circuit on a second-way bus side has an electrical fault, and the first circuit protection module on a second-way bus is in a state in which the circuit on the second-way bus side is connected to the circuit on the battery side, enter in a state in which the circuit on the battery side is not connected to a circuit on a first-way bus side.

Based on the above, the first circuit protection module is disposed on each way of the bus. By using the foregoing solution, when one way of the bus has a fault, the other way of the bus is not affected, so as to meet a high safety power supply requirement for operation under faults.

In a possible implementation of the first aspect, a sub-branch line is connected to at least one branch line, and the sub-branch line is configured to connect to the load.

Based on the above, some common loads may be connected to the sub-branch line by disposing the sub-branch line on the branch line.

In a possible implementation of the first aspect, a third circuit protection module connected in series to the sub-branch line is disposed on the sub-branch line; and
the third circuit protection module is configured to: when a side of the load connected to the sub-branch line has an electrical fault, enter in a state in which the sub-branch line is open-circuit.

Based on the above, by using the third circuit protection module of the sub-branch line, when the side of the load connected to the sub-branch line has an electrical fault, for example, a fault such as over-current or short-circuit, power supply to the sub-branch line may be cut off, so as to avoid impact of the faulty side of the load connected to the sub-branch line on the bus.

In a possible implementation of the first aspect, a fourth circuit protection module connected in series to the branch line is disposed on the branch line; and
for the branch line connected to the load, the fourth circuit protection module disposed on the branch line is configured to: when the side of the load connected to the branch line has an electrical fault, enter in a state in which the branch line is open-circuit, or
for the branch line connected to the sub-branch line, the fourth circuit protection module disposed on the branch line is configured to: when a combination side of the sub-branch line connected to the branch line has an electrical fault, enter in a state in which the branch line is open-circuit.

Based on the above, by using the fourth circuit protection module on the branch line, when the side of the load connected to the branch line or the combination side of the connected sub-branch line has an electrical fault, for example, a fault such as over-current or short-circuit, power supply to the branch line may be cut off, so as to avoid impact of the faulty load or the sub-branch line connected to the branch line on the bus.

In a possible implementation of the first aspect, a response time of the fourth circuit protection module to the electrical fault is shorter than a response time of the third circuit protection module to the electrical fault.

Based on the above, by using different safety levels of the fourth circuit protection module (for example, a high safety load over-current protection circuit) and the third circuit protection module (for example, a conventional load over-current protection circuit), classified control and management of a "high safety load" and a "low safety load" are implemented, so that a cost of a power distribution system can be controlled, and it is unnecessary to fully use the fourth circuit protection module with a high safety level and a high cost.

In a possible implementation of the first aspect, the second terminal of the bus is connected to a second circuit protection module in series; the second circuit protection module is configured to: when one of circuits on two sides of the second circuit protection module has an electrical fault, enter in a state in which the circuit on the electrical fault side is not connected to a circuit on the other side; and
the electrical fault includes at least one of the following: an over-current fault, an over-voltage fault, and an under-voltage fault.

Based on the above, when the power distribution apparatus in this application is applied, the second circuit protection module is added, so that when a circuit on one side of the first circuit protection module has an electrical fault, for example, a fault such as over/under-voltage or over-current, the faulty side is not connected to the other side, so as to avoid impact of the circuit on the faulty side on the other side, and meet a requirement of supporting operation under faults.

In a possible implementation of the first aspect, the second circuit protection module is specifically configured to: when a circuit on a second power supply apparatus side of the second circuit protection module has an electrical fault, enter in a state in which the circuit on the second power supply apparatus side is not connected to a circuit on the bus side.

Based on the above, by using the specific configuration of the second circuit protection module, when a circuit on the side of the second power supply apparatus has an electrical fault, for example, a fault such as over/under-voltage or over-current, impact of the circuit on the side of the second power supply apparatus on the bus is avoided by using a disconnected state. In this case, the battery may be used to supply power, so as to meet a requirement of supporting operation under faults.

In a possible implementation of the first aspect, the second circuit protection module is specifically configured to: when the bus side of the second circuit protection module has an electrical fault, enter in a state in which a circuit on the bus side is not connected to a circuit on a second power supply apparatus side.

Based on the above, by using the configuration, when the bus side has an electrical fault, such as over/under-voltage, over-current, or electric leakage, the bus and the second power supply apparatus may be in an open-circuit state, so as to avoid impact of the bus fault on the second power supply apparatus and meet a safety requirement for operation under faults.

In a possible implementation of the first aspect, the bus is the parallel two-way bus, and one terminal that is of each way of the bus and that is used to connect to the second power supply apparatus is connected to the second circuit protection module in series; and the second circuit protection module on the two-way bus is specifically configured to: when the circuit on the second power supply apparatus side of the second circuit protection module on the two-way bus has an electrical fault, enter in a state in which the circuit on the second power supply apparatus side is not connected to the circuit on the bus side.

Based on the above, a dual-bus structure is used. This implements redundancy of power supply and further meets a high safety power supply requirement for operation under faults. In addition, the second circuit protection module is disposed on each way of the bus, so that when the second power supply side has an electrical fault, circuits on two bus sides are not affected, thereby meeting a high safety power supply requirement for operation under faults.

In a possible implementation of the first aspect, the second circuit protection module on a first-way bus in the two-way bus is further specifically configured to: when the circuit on a side of a second-way bus in the two-way bus has an electrical fault, and the second circuit protection module on the second-way bus is in a state in which the circuit on the second-way bus side is connected to the circuit on the second power supply apparatus side, enter in a state in which the circuit on the second power supply apparatus side is not connected to the circuit on a side of the first-way bus.

Based on the above, the second circuit protection module is disposed on each way of the bus. By using the foregoing configuration solution, when one way of the bus has a fault, the other way of the bus is not affected, so as to meet a high safety power supply requirement for operation under faults.

In a possible implementation of the first aspect, a control module is further included, and is configured to: receive information about each electrical fault and/or information about the battery state, and control at least one of the circuit protection modules to be in the closed-circuit state or the open-circuit state.

Based on the above, real-time monitoring and management may be performed on the electrical fault on the battery side and the second power supply apparatus side, the electrical fault on each branch line side or sub-branch line side, and the electrical fault on the bus side by using the control module, so as to implement load fault management, quick fault locating, and fault processing.

In a possible implementation of the first aspect, when the bus is the parallel two-way bus, the control module is two control modules that communicate with each other;
the information that is about each electrical fault and that is received by one of the control modules, and the circuit protection module controlled by the control module correspond to one way of the bus, or a branch line connected to the bus, or a sub-branch line connected to the branch line; and
the information that is about each electrical fault and that is received by the other control module, and the circuit protection module controlled by the control module correspond to the other way of the bus, or a branch line connected to the bus, or a sub-branch line connected to the branch line.

Based on the above, control redundancy may be implemented by using the two control modules. In addition, in the foregoing manner, the control modules each correspond to one bus, so that risk decentralized control can be implemented, and safety is improved.

A second aspect of this application provides a vehicle, including the power distribution apparatus in the first aspect.

Based on the above, the power distribution apparatus in the first aspect may be applied to the vehicle, to support a power distribution system of the vehicle in operating under faults.

A third aspect of this application provides a fault processing method, applied to a power distribution apparatus, where the power distribution apparatus includes a bus, the bus includes a first terminal and a second terminal, the first terminal of the bus is connected to a battery, and the first terminal of the bus is connected to a first circuit protection module in series; and
the fault processing method includes: when it is detected that one of circuits on two sides of the first circuit protection module has an electrical fault, enabling the first circuit protection module to be in a first state, where the first state includes that the first circuit protection module is in a state in which the circuit on the electrical fault side is not connected to a circuit on the other side.

Based on the above, the first circuit protection module is disposed between the first terminal of the bus and the battery. By using the first circuit protection module, a state in which the circuit on the electrical fault side is not connected to the circuit on the other side may be enabled, so that the vehicle can operate under faults.

In a possible implementation of the third aspect, the second terminal of the bus is connected to a second power supply apparatus, and the second terminal of the bus is connected to a second circuit protection module in series; and the fault processing method specifically includes:
when a first fault is detected, enabling the first circuit protection module to be in a second open-circuit state; and
when the first circuit protection module cannot be in the second open-circuit state, enabling the second circuit protection module on the bus on which the first circuit protection module is located to be in a third open-circuit state, where
the first fault includes at least one of the following: an electrical fault of a circuit on a battery side, an abnormal state of the battery, and an over-temperature fault of the battery;
the second open-circuit state includes: the first circuit protection module is in a state in which the circuit on the battery side of the first circuit protection module is not connected to a circuit on a bus side; and
the third open-circuit state includes: the second circuit protection module is in a state in which a circuit on the side of the bus of the second circuit protection module is not connected to a circuit on a second power supply apparatus side.

Based on the above, when the circuit on the battery side has an electrical fault or the battery state is abnormal, the first circuit protection module may be enabled to be in the second open-circuit state, to avoid impact of the fault of the circuit on the battery side on the bus. In addition, when the first circuit protection module cannot be in the second open-circuit state, the corresponding second circuit protection module is enabled to be in the third open-circuit state, so as to avoid impact on the second power supply apparatus side caused by the fault of the circuit on the battery side by using the bus, thereby improving reliability and safety of operation under faults.

In a possible implementation of the third aspect, the method further includes: when the first circuit protection module is in the second open-circuit state, executing a first failure policy, where the first failure policy includes a low-voltage battery failure policy of a vehicle; or
when the second circuit protection module on the bus on which the first circuit protection module is located is in the third open-circuit state, executing a second failure policy, where the second failure policy includes the low-voltage battery failure policy and a one-way power distribution failure policy of the vehicle.

Based on the above, corresponding to different states of the first and second circuit protection modules when a fault occurs, different vehicle fault policies are used, to improve reliability and safety of operation under faults.

In a possible implementation of the third aspect, the method further includes: after the first circuit protection module is enabled to be in the second open-circuit state, after it is detected that the first fault is recovered, enabling the first circuit protection module to be in a first connected state, where
the first connected state includes: the first circuit protection module is in a state in which the circuit on the battery side of the first circuit protection module is connected to the circuit on the bus side.

Based on the above, the fault may be recovered, to further improve safety.

In a possible implementation of the third aspect, the second terminal of the bus is connected to a second power supply apparatus, and the second terminal of the bus is connected to a second circuit protection module in series; and the fault processing method specifically includes:
when it is detected that a circuit on a second power supply apparatus side has an electrical fault, enabling the second circuit protection module to be in a fourth open-circuit state; and
when the second circuit protection module cannot be in the fourth open-circuit state, enabling the first circuit protection module on the bus on which the second circuit protection module is located to be in the first open-circuit state, where
the first open-circuit state includes: the first circuit protection module is in a state in which a circuit on a bus side of the first circuit protection module is not connected to a circuit on a battery side; and
the fourth open-circuit state includes: the second circuit protection module is in a state in which the circuit on the second power supply apparatus side of the second circuit protection module is not connected to the circuit on the bus side.

Based on the above, when the circuit on the second power supply apparatus side has an electrical fault, the second circuit protection module may be enabled to be in the fourth open-circuit state, to avoid impact of the fault of the circuit on the second power supply apparatus side on the bus. In addition, when the second circuit protection module cannot be in the fourth open-circuit state, the corresponding first circuit protection module is enabled to be in the second open-circuit state, so as to avoid impact on the battery side caused by the fault of the circuit on the second power supply apparatus side by using the bus, thereby improving reliability and safety of operation under faults.

In a possible implementation of the third aspect, the method further includes: when the second circuit protection module is in the fourth open-circuit state, executing a third failure policy, where the third failure policy includes a second power supply apparatus failure policy of a vehicle; or
when the first circuit protection module on the bus on which the second circuit protection module is located is in the first open-circuit state, executing a fourth failure policy, where the fourth failure policy includes the second power supply apparatus failure policy and a one-way power distribution failure policy of the vehicle.

Based on the above, corresponding to different states of the first and second circuit protection modules when a fault occurs, different vehicle fault policies are used, to improve reliability and safety of operation under faults.

In a possible implementation of the third aspect, after the enabling the second circuit protection module to be in a fourth open-circuit state, the method further includes:
enabling the first circuit protection module on the bus on which the second circuit protection module is located to be in the first connected state, where the first connected state includes: the first circuit protection module is in a state in which the circuit on the battery side of the first circuit protection module is connected to the circuit on the bus side.

Based on the above, when the second power supply apparatus side has a fault, power supply to the battery side is implemented in the foregoing manner, to implement operation under faults, thereby improving operation safety.

In a possible implementation of the third aspect, the second terminal of the bus is connected to a second power supply apparatus, and the second terminal of the bus is connected to a second circuit protection module in series; and a branch line is disposed between the first terminal and the second terminal of the bus, and the branch line is connected to a fourth circuit protection module in series; and the fault processing method specifically includes:
when a second fault is detected, enabling the fourth circuit protection module to be in an open-circuit state; and
when the fourth circuit protection module cannot be in the open-circuit state, enabling the first circuit protection module on the bus on which the branch line on which the fourth circuit protection module is disposed is located to be in the first open-circuit state, and enabling the second circuit protection module to be in a third open-circuit state, where
the second fault includes at least one of the following: an electrical fault on a side of a load connected to the branch line, and an electrical fault on a combination side of a sub-branch line connected to the branch line.

Based on the above, when the side of the load connected to the branch line or the combination side of the sub-branch line connected to the branch line has an electrical fault, the fourth circuit protection module is enabled to be in the open-circuit state to avoid impact the fault of the load or the sub-branch line on the bus. In addition, when the fourth circuit protection module cannot be in the open-circuit state, the corresponding first circuit protection module is enabled to be in the first open-circuit state, and the second circuit protection module is enabled to be in the third open-circuit state, so as to avoid impact on the battery side and the second power supply apparatus side caused by the fault by using the bus, thereby improving reliability and safety of operation under faults.

In a possible implementation of the third aspect, the method further includes:
when the fourth circuit protection module is in the open-circuit state, executing a fifth failure policy, where the fifth failure policy includes a one-way branch line failure policy; or
when the first circuit protection module on the bus on which the branch line is located is in the first open-circuit state, and the second circuit protection module on the bus on which the branch line is located is in a third open-circuit state, executing a sixth failure policy, where the sixth failure policy includes a one-way power distribution failure policy of the vehicle.

Based on the above, different vehicle fault policies are used corresponding to different faults, to improve reliability and safety of operation under faults.

In a possible implementation of the third aspect, the second terminal of the bus is connected to a second power supply apparatus, and the second terminal of the bus is connected to a second circuit protection module in series, where
a branch line is disposed between the first terminal and the second terminal of the bus, the branch line is connected to a fourth circuit protection module in series, a sub-branch line is disposed on the branch line, and the sub-branch line is connected to a third circuit protection module in series; and
the fault processing method specifically includes:
   when it is detected that a side of a load connected to the sub-branch line has an electrical fault, enabling the third circuit protection module to be in an open-circuit state;
   when the third circuit protection module cannot be in the open-circuit state, enabling the fourth circuit protection module on the branch line on which the sub-branch line is located to be in an open-circuit state; and
   when the fourth circuit protection module cannot be in the open-circuit state, enabling the first circuit protection module on the bus on which the branch line is located to be in the first open-circuit state, and enabling the second circuit protection module to be in a third open-circuit state.

Based on the above, when the sub-branch line side has an electrical fault, the third circuit protection module is enabled to be in the open-circuit state, so as to avoid impact of the sub-branch line fault on the bus. In addition, when the third circuit protection module cannot be disconnected, the fourth circuit protection module is enabled to be in the open-circuit state, to avoid impact of the sub-branch line fault on the bus. In addition, when the fourth circuit protection module cannot be in the open-circuit state, the corresponding first circuit protection module is enabled to be in the first open-circuit state, and the second circuit protection module is enabled to be in the third open-circuit state, so as to avoid impact on the battery side and the second power supply apparatus side caused by the fault by using the bus, thereby improving reliability and safety of operation under faults.

In a possible implementation of the third aspect, the method further includes:
when the fourth circuit protection module is in the open-circuit state, executing a fifth failure policy, where the fifth failure policy includes a one-way branch line failure policy; or
when the first circuit protection module on the bus on which the branch line is located is in the first open-circuit state, and the second circuit protection module on the bus on which the branch line is located is in the third open-circuit state, executing a sixth failure policy, where the sixth failure policy includes a one-way power distribution failure policy of a vehicle.

Based on the above, corresponding to different states of the first, second, third, and fourth circuit protection modules when a fault occurs, different vehicle fault policies are used, to improve reliability and safety of operation under faults.

In a possible implementation of the third aspect, the second terminal of the bus is connected to a second power supply apparatus, and the second terminal of the bus is connected to a second circuit protection module in series; and the fault processing method specifically includes:
when it is detected that one way of the bus has a fault, enabling the first circuit protection module on the faulty bus to be in the first open-circuit state, and enabling the second circuit protection module on the faulty bus to be in the third open-circuit state; and
when the first circuit protection module cannot be in the first open-circuit state, enabling the first circuit protection module on the other way of the bus to be in a second open-circuit state, or when the second circuit protection module cannot be in the third open-circuit state, enabling the second circuit protection module on the other way of the bus to be in a fourth open-circuit state.

Based on the above, when the side of one way of the bus has an electrical fault, the first circuit protection module on the faulty bus is enabled to be in the first open-circuit state, and the second circuit protection module is enabled to be in the third open-circuit state, so as to avoid impact of the faulty bus on the battery side, the second power supply apparatus side, and the other bus, thereby improving reliability and safety of operation under faults.

In addition, when the first circuit protection module cannot be in the first open-circuit state, the first circuit protection module on the other way of the bus is enabled to be in the second open-circuit state, so as to avoid impact of the faulty bus on the other bus, thereby improving reliability and safety of operation under faults.

In addition, when the second circuit protection module cannot be in the third open-circuit state, the second circuit protection module on the other way of the bus is enabled to be in the fourth open-circuit state, so as to avoid impact of the faulty bus on the other bus, thereby improving reliability and safety of operation under faults.

In a possible implementation of the third aspect, when the first circuit protection module is in the first open-circuit state, and the second circuit protection module is in the third open-circuit state, executing a one-way power distribution failure policy of a vehicle; or
when the first circuit protection module cannot be in the first open-circuit state, and the first circuit protection module on the other way of the bus is in the second open-circuit state, executing a low-voltage battery failure policy and the one-way power distribution failure policy of the vehicle; or
when the second circuit protection module cannot be in the third open-circuit state, and the second circuit protection module on the other way of the bus is in the fourth open-circuit state, executing a second power supply apparatus failure policy and the one-way power distribution failure policy of the vehicle.

Based on the above, corresponding to different states of the first and second circuit protection modules when one way of the bus has a fault, different vehicle fault policies are used, to improve reliability and safety of operation under faults.

A fourth aspect of this application provides a readable storage medium. The readable storage medium stores a program or an instruction. When the program or the instruction is executed, the fault processing method in any implementation of the third aspect is implemented.

In conclusion, it can be learned that, in embodiments of the technical solutions provided in this application, the first circuit protection module is added, so that operation under faults can be supported in a single battery condition, thereby greatly reducing an overall cost of the power distribution system. Specifically, when a single-bus structure is used, accurate and quick detection and safe isolation of a fault on the second power supply apparatus side, a fault on the battery side, and a fault on the load side of the power distribution system are implemented, and the single-way low-voltage power distribution system can meet a high safety power supply requirement for operation under faults of an ASIL B level.

In addition, when the power distribution system of the power distribution apparatus using the dual-bus structure is used, accurate and quick detection and safe isolation of a power supply fault on the second power supply apparatus side, a fault on two power supply lines, a fault on the load side, and a fault on the battery side may be implemented, and the power distribution system of the power distribution apparatus using the dual-bus structure can meet a high safety power supply requirement for operation under faults of an ASIL D level.

In addition, by using the fourth circuit protection module (for example, a high safety load over-current protection circuit) and the third circuit protection module (for example, a conventional load over-current protection circuit), classified control and management of a high safety load and a low safety load are implemented, so that a cost of the power distribution system can be reduced.

In addition, the control module monitors and manages faults in real time to implement fault management, fault locating, and fault processing, thereby meeting a high safety requirement for operation under faults.

These aspects and another aspect of this application will be clearer and easier to understand in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in the entire text this specification, content referred to by same reference signs is also the same. The specific accompanying drawings are described as follows:
FIG. 1 is a schematic diagram of a structure of a power distribution apparatus according to an embodiment of this application;
FIG. 2a-1 is a first schematic diagram of a structure of a power distribution apparatus according to a first specific implementation of this application;

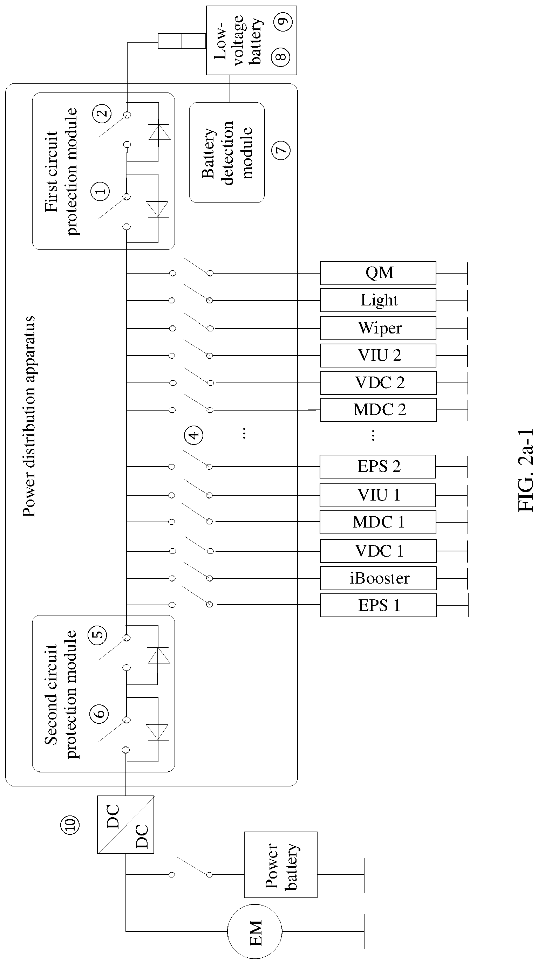

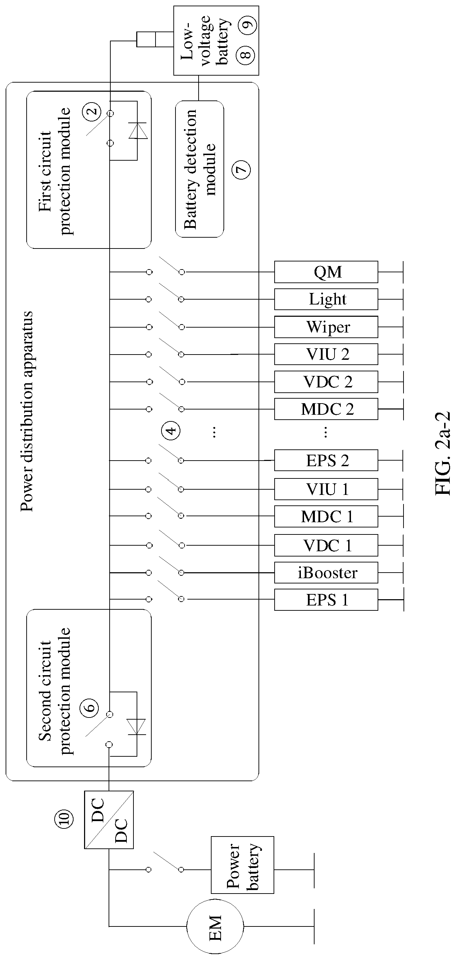

FIG. 2a-2 is a second schematic diagram of the structure of the power distribution apparatus according to the first specific implementation of this application;

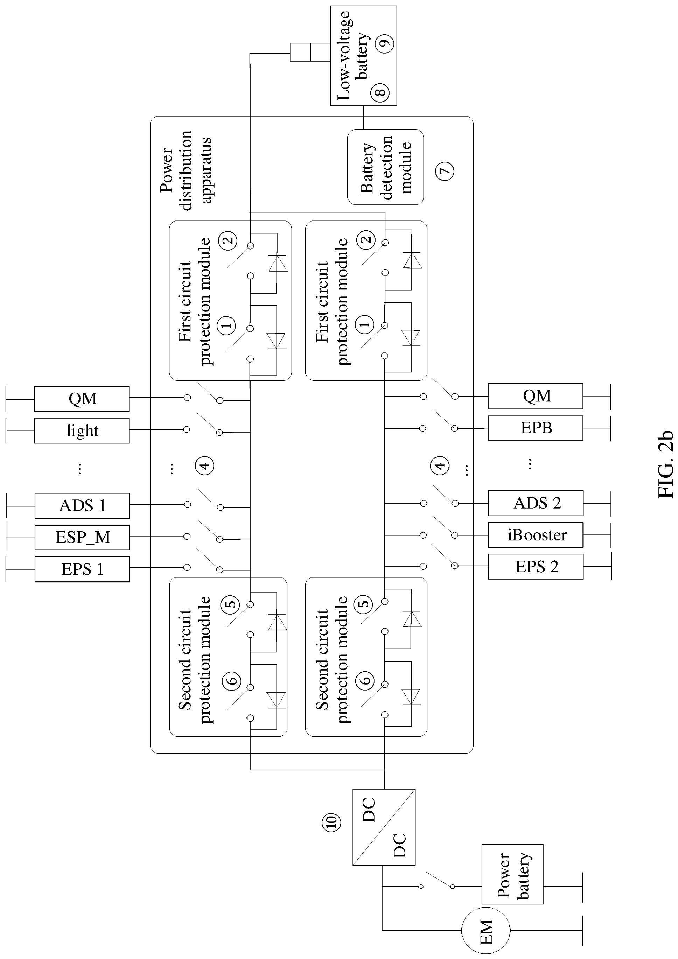

FIG. 2b is a first schematic diagram of a structure of a power distribution apparatus according to a second specific implementation of this application;

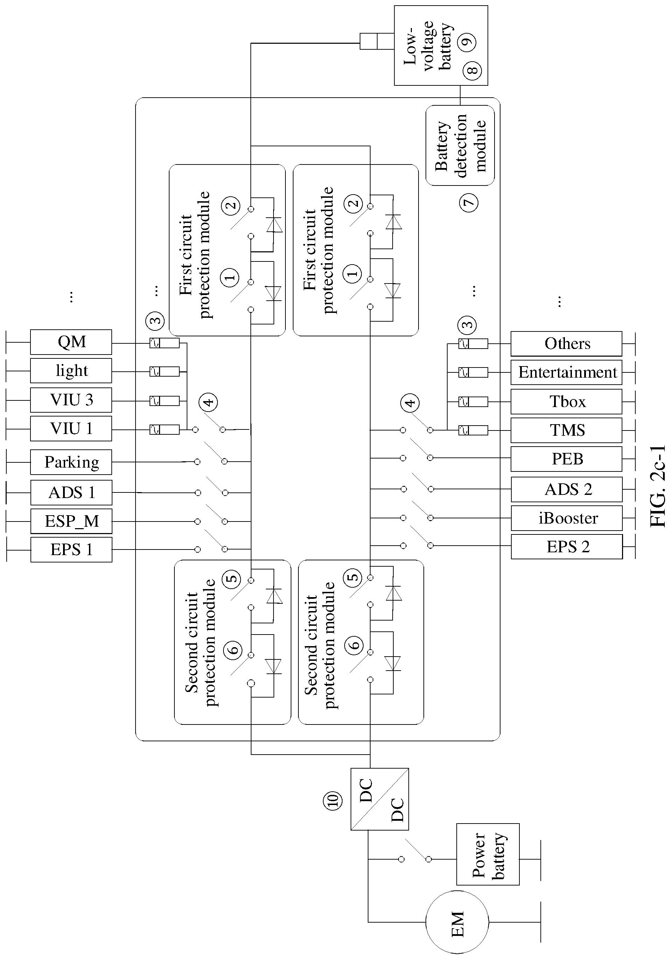

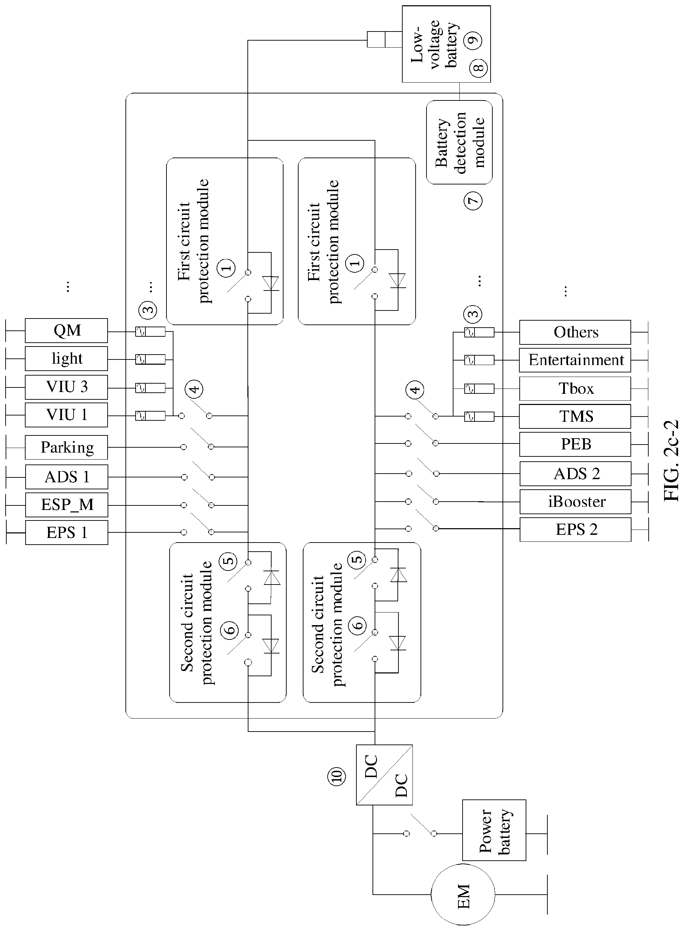

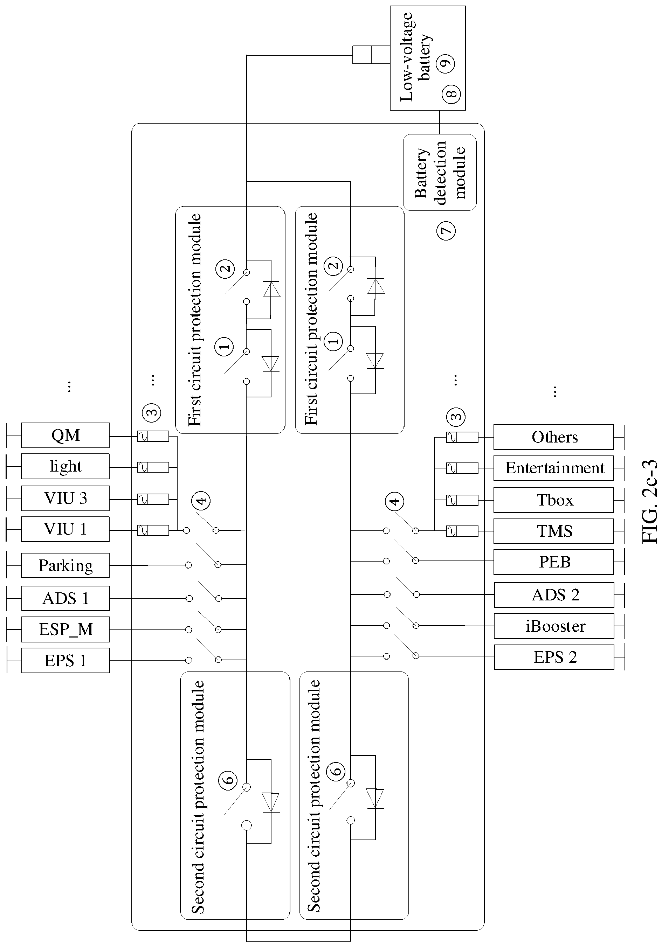

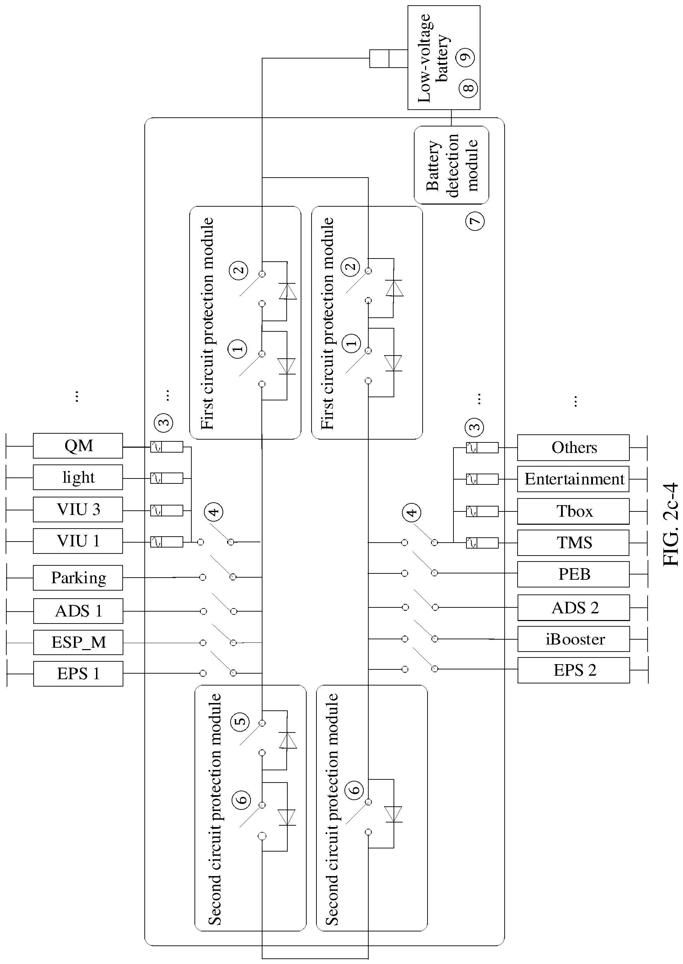

FIG. 2c-1 is a first schematic diagram of a structure of a power distribution apparatus according to a third specific implementation of this application;
FIG. 2c-2 is a second schematic diagram of the structure of the power distribution apparatus according to the third specific implementation of this application;
FIG. 2c-3 is a third schematic diagram of the structure of the power distribution apparatus according to the third specific implementation of this application;

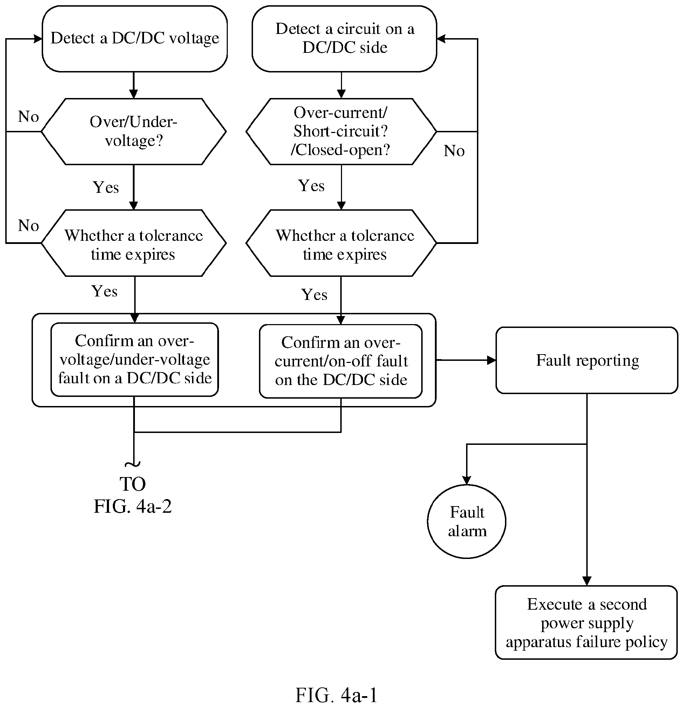

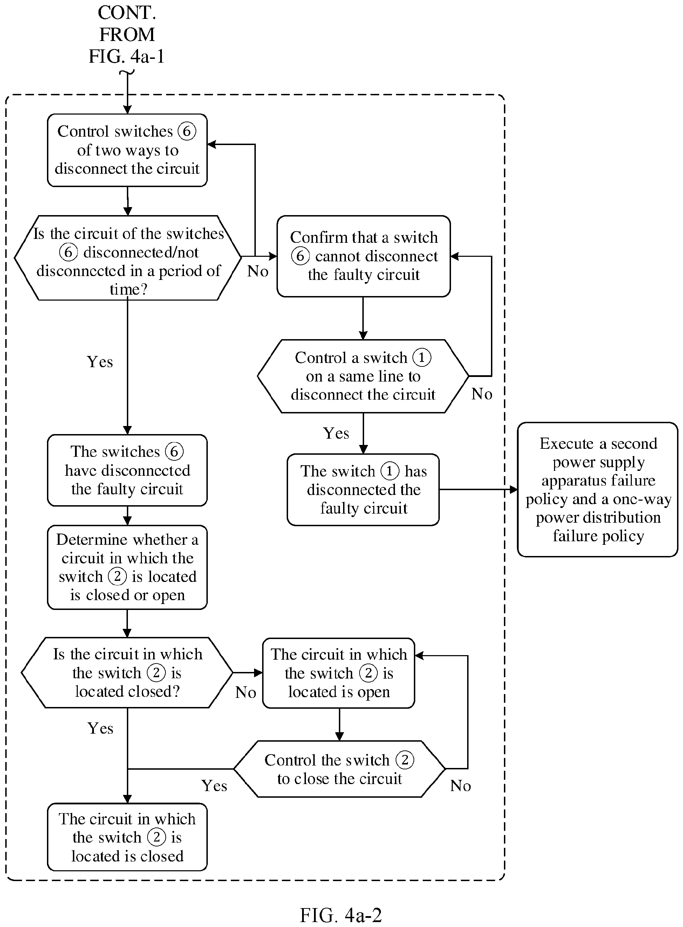

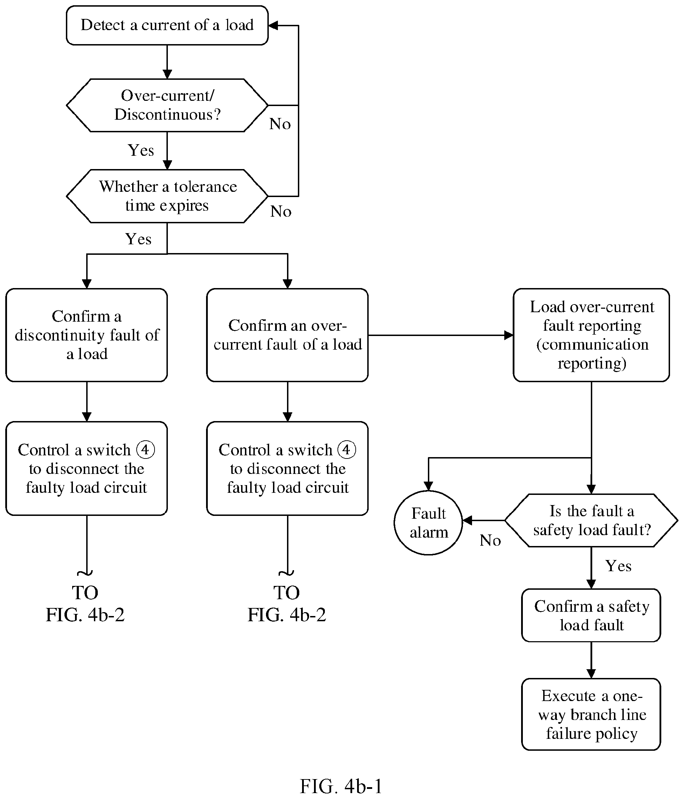

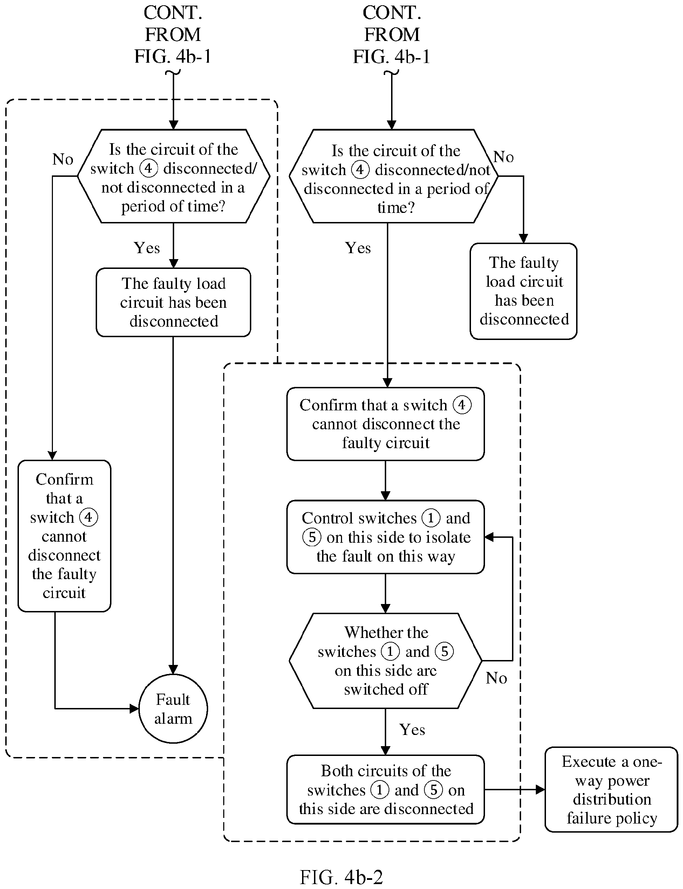

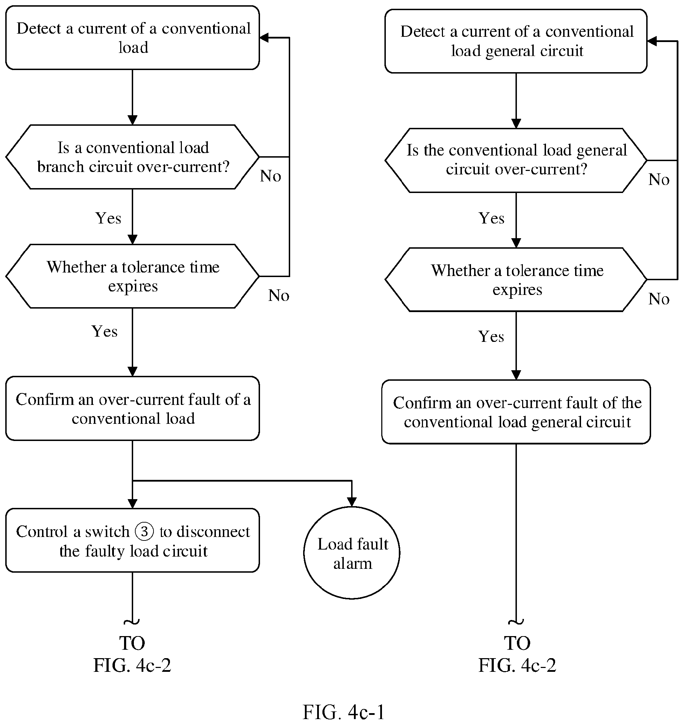

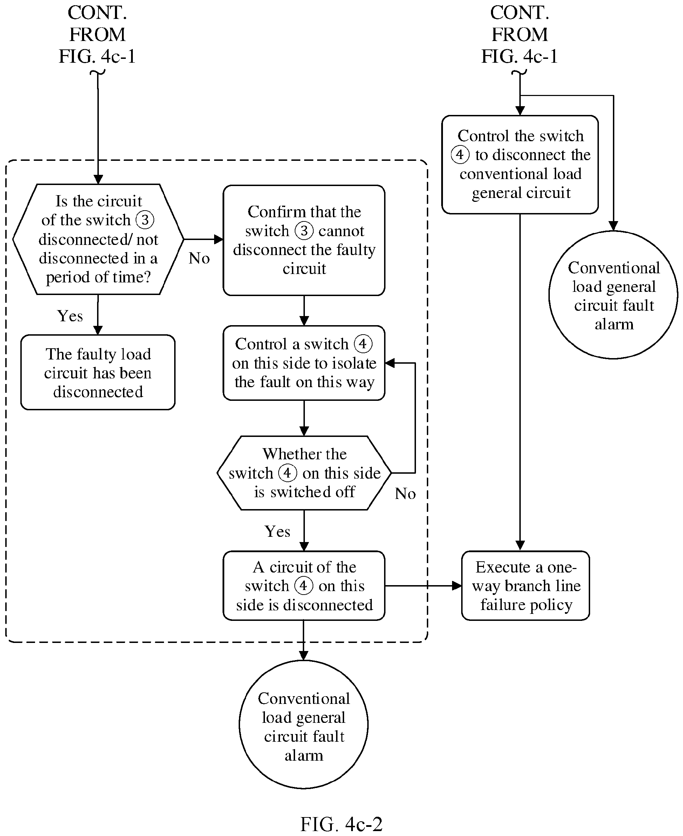

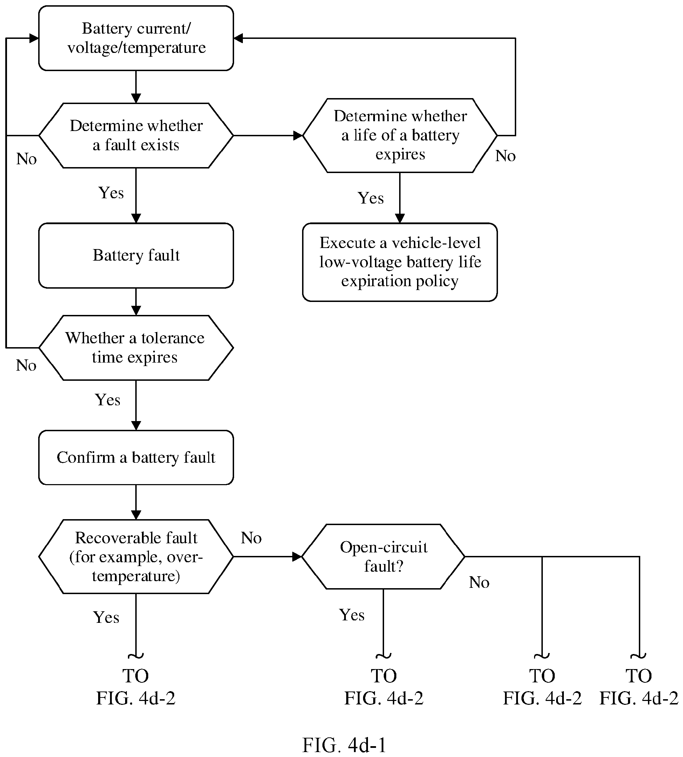

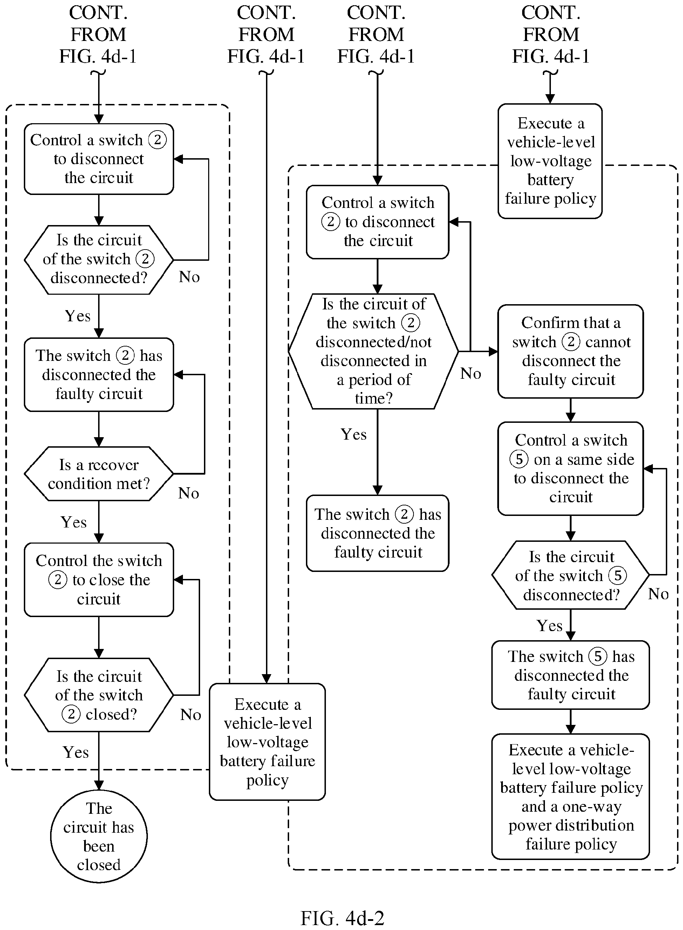

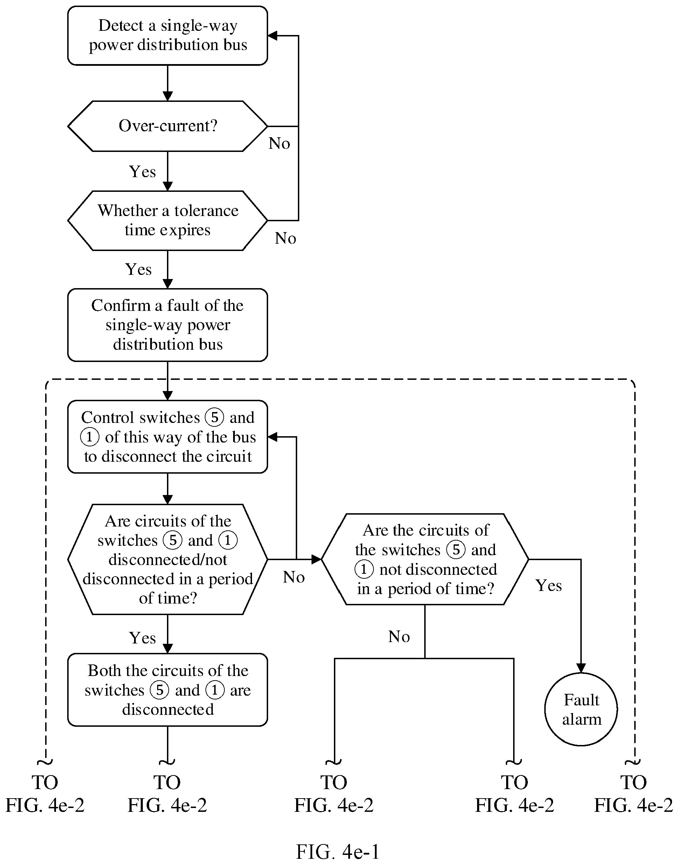

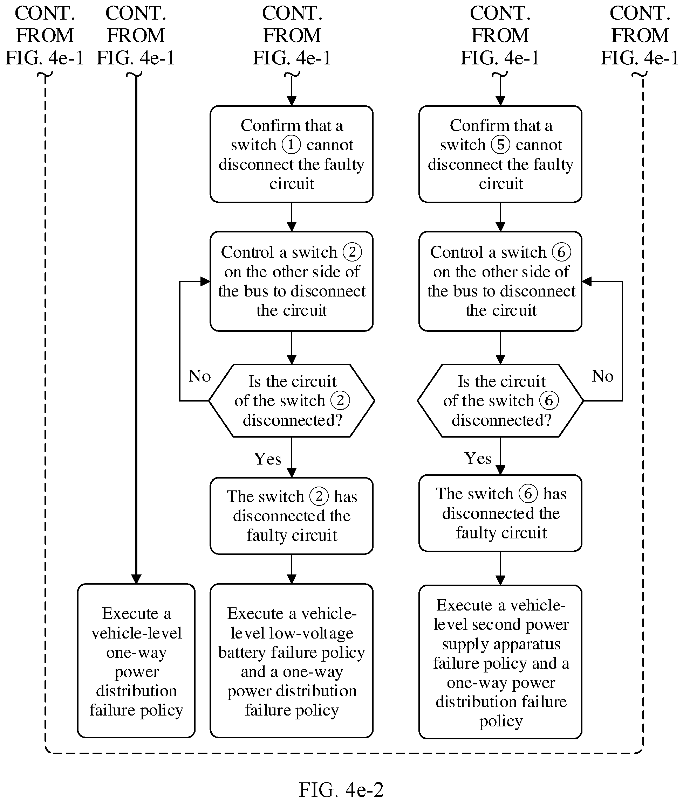

FIG. 2c-4 is a fourth schematic diagram of the structure of the power distribution apparatus according to the third specific implementation of this application;

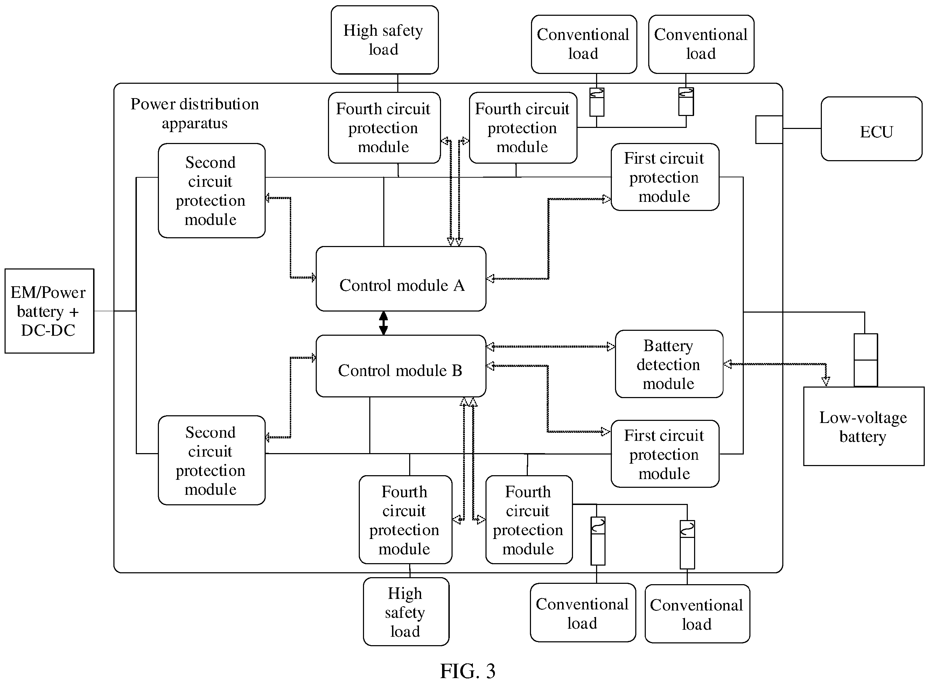

FIG. 3 is a schematic diagram of a system architecture of a power distribution apparatus according to an embodiment of this application;
FIG. 4a-1 and FIG. 4a-2 are a flowchart of DC-DC side fault control corresponding to a specific implementation of this application;
FIG. 4b-1 and FIG. 4b-2 are a flowchart of load circuit fault control corresponding to a specific implementation of this application;
FIG. 4c-1 and FIG. 4c-2 are a flowchart of two-level load circuit fault control corresponding to a specific implementation of this application;
FIG. 4d-1 and FIG. 4d-2 are a flowchart of low-voltage battery side fault control corresponding to a specific implementation of this application;
FIG. 4e-1 and FIG. 4e-2 are a flowchart of single-way power distribution circuit bus fault control corresponding to a specific implementation of this application;

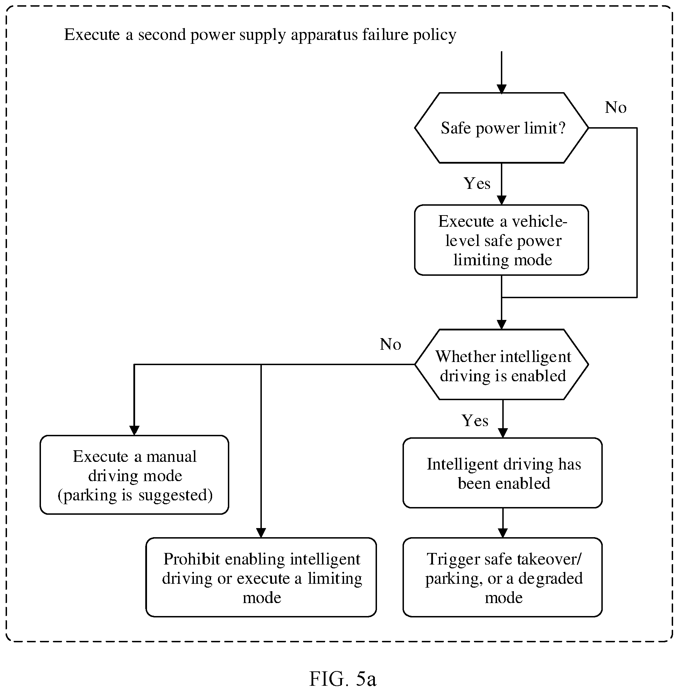

FIG. 5a is a flowchart of executing a second power supply apparatus failure policy corresponding to a specific implementation of this application; and

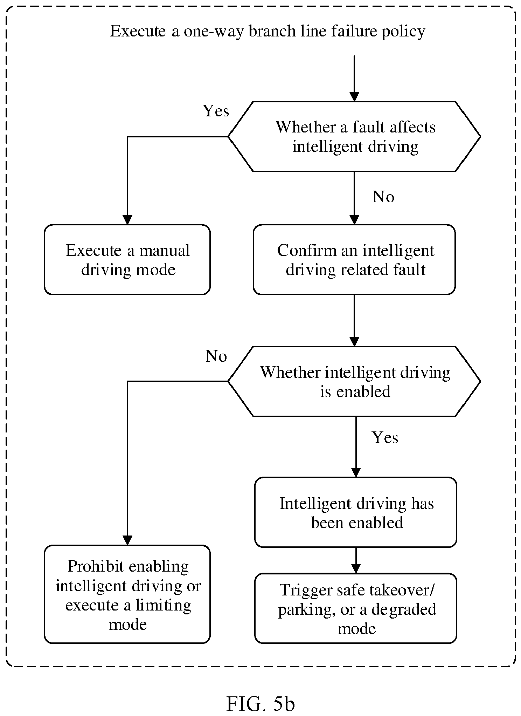

FIG. 5b is a flowchart of executing a one-way branch line failure policy corresponding to a specific implementation of this application.

### DESCRIPTION OF EMBODIMENTS

In this specification and claims, the terms "first, second, third, and the like" or similar terms such as a module A, a module B, and a module C are merely used to distinguish between similar objects, and do not represent a specific order of the objects. It may be understood that specific orders or sequences may be exchanged if permitted, so that the embodiments of this application described herein can be implemented in an order other than an order illustrated or described herein.

In the following descriptions, involved reference numerals such as S110 and S 120 that indicate steps do not necessarily indicate that the steps are to be performed based on the order, and consecutive steps may be transposed if allowed, or may be performed simultaneously.

The term "include" used in this specification and claims should not be construed as being limited to the content listed below, and does not exclude other elements or steps. Therefore, it should be construed as specifying existence of a mentioned feature, whole, step, or part, but does not preclude existence or addition of one or more other features, wholes, steps, or parts and their groups. Therefore, the expression "a device including an apparatus A and an apparatus B" should not be limited to a device including only the components A and B.

"One embodiment" or "an embodiment" mentioned in this specification indicates that a particular feature, structure or property that is described with reference to the embodiment is included in at least one embodiment of this application. Therefore, the terms "in one embodiment" or "in an embodiment" that appear in this specification do not necessarily indicate a same embodiment, but may indicate a same embodiment. Further, in one or more embodiments, the particular features, structures, or properties can be combined in any proper manner, as will be clear from the present disclosure to a person of ordinary skill in the art.

Unless otherwise defined, all technical and scientific terms used in this specification have same meanings as those usually understood by a person skilled in the art of this application. In case of any inconsistency, the meaning described in this specification or the meaning obtained according to the content recorded in this specification is used. In addition, the terms used in this specification are merely for the purpose of describing embodiments of this application, but are not intended to limit this application.

A power distribution system of a vehicle is a low-voltage power distribution system that uses dual batteries. The power distribution system uses two batteries and two battery detection modules, to supply power to a redundant load independently. The battery detection module uses an intelligent battery sensor (intelligent battery sensor, IBS). Because two batteries and two battery detection modules are used, a requirement for high safety and high availability operation can be met. However, on the other hand, a structure of the power distribution system is excessively redundant, resulting in relatively high costs.

An embodiment of this application provides an improved power distribution apparatus. The power distribution apparatus uses one power distribution box, and when a configured battery is connected, a requirement for high safety and high availability can be met when one battery is connected, so that an overall cost of a power distribution system is greatly reduced. When the power distribution apparatus is applied to a vehicle, high-safety and high-availability low-voltage power supply that supports operation under power supply faults may be provided for a high-safety system such as an intelligent driving system, a steer-by-wire control system, a brake-by-wire control system, and a heavy vehicle chassis electronic assistance system of the vehicle may be implemented, so as to ensure that a driver can safely take over a driving system, safely operate steering, and brake when a power supply related fault occurs, thereby improving driving safety.

The power distribution apparatus in this embodiment of this application may be applied to a vehicle, for example, an intelligent car (Smart/Intelligent Car), a pure electric vehicle (Pure EV/Battery EV), a hybrid electric vehicle (Hybrid Electric Vehicle/HEV), a range extended electric vehicle (Range Extended EV/REEV), a plug-in hybrid electric vehicle (Plug-in HEV/PHEV), a new energy vehicle (New Energy Vehicle), or a flight device (such as an airplane).

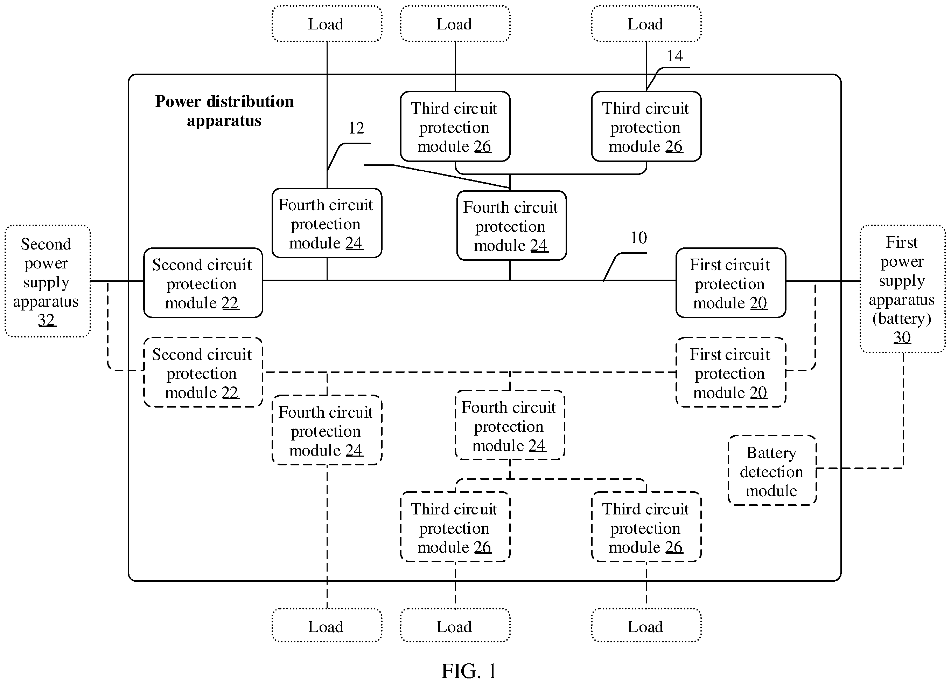

With reference to FIG. 1, the following describes a power distribution apparatus according to an embodiment of this application. The power distribution apparatus in FIG. 1 includes a solid line part and a dashed line part, and the dashed line part represents an optional part. First, the solid line part shown in FIG. 1 is described. Reference may also be made to FIG. 2a-1 or FIG. 2a-2. The power distribution apparatus includes: a bus (or referred to as a bus) 10, where the bus 10 is connected to a branch line 12, and the branch line 12 is used to connect to a load. Specifically, one terminal that is of the branch line 12 and that is away from the bus 10 is used to connect to the load, where the load may be connected in a manner of disposing an electrical connection terminal. Two terminals of the bus 10, that is, a first terminal and a second terminal, are respectively used to connect to a first power supply apparatus 30 and a second power supply apparatus 32, where the two terminals may be connected to the first power supply apparatus 30 and the second power supply apparatus 32 by using an electrical connection terminal. One terminal that is of the bus 10 and that is used to connect to the first power supply apparatus 30, that is, the first terminal, is connected to a first circuit protection module 20 in series.

In some embodiments, the first power supply apparatus 30 is an energy storage device, for example, may be a battery. The battery is used to provide an operating voltage, for example, a voltage such as 12 V, 24 V, or 36 V Therefore, the battery is also referred to as a low-voltage battery. In some other embodiments, the first power supply apparatus 30 may alternatively be a power generation apparatus that provides an operating voltage, that is, a low-voltage power supply.

In some embodiments, the second power supply apparatus 32 may be a generator (EM) or a power battery, and a high voltage output by the generator (EM) or the power battery is converted into an operating voltage through voltage conversion and then input to the bus 10. Herein, application to a vehicle is used for description. A high voltage output by a generator and a power battery of the vehicle is mostly between 200 V and 750 V, and the high voltage is used to drive a driving motor of the vehicle, an electric compressor of an air conditioner, and the like. Operating voltages of most circuits in the vehicle, such as various control circuits, are low voltages, and are usually lower than 48 V Therefore, a high voltage needs to be converted into a low voltage through voltage conversion, and then the low voltage is provided to the bus 10. The voltage conversion may be implemented by using a direct current-direct current (DC-DC) conversion module.

In some embodiments, one terminal that is of the bus 10 and that is used to connect to the second power supply apparatus 32, that is, the second terminal, is connected to a second circuit protection module 22 in series.

In some embodiments, reference may be made to both the solid line part and the dashed line part shown in FIG. 1, or reference may be made to FIG. 2b and FIG. 2c-1 to FIG. 2c-4. The bus 10 may be a parallel two-way bus 10. After being combined, two terminals of the parallel bus 10 are respectively used to connect to the first power supply apparatus 30 and the second power supply apparatus 32. Each way of the bus 10 may be connected to the branch line 12, where each way of the bus 10 is connected to the first circuit protection module 20 in series, and the first circuit protection module 20 is located on one terminal that is on the bus 10 and that is used to connect to the first power supply apparatus 30, that is, located on one terminal that is on the bus 10 and that is close to a combination node on the side. In some embodiments, when the bus 10 is a parallel two-way bus 10, each way of the bus 10 is further connected to the second circuit protection module 22 in series, and the second circuit protection module 22 is located on one terminal that is on the bus 10 and that is used to connect to the second power supply apparatus 32, that is, located on one terminal that is on the bus 10 and that is close to a combination node on the side.

In some embodiments, when the bus 10 is a parallel dual bus 10, for a load that requires dual power supply, two power receiving ports of the load may be respectively connected to branch lines 12 of the two-way bus 10, so that when one way of the bus 10 is offline, the load may still be powered by the other way of the bus 10. In some other embodiments, the two power receiving ports of the load may alternatively be connected to the branch line 12 of a same way of the bus 10 of the dual bus 10.

In some embodiments, as shown in FIG. 1, or with reference to FIG. 2a-1 to FIG. 3, a fourth circuit protection module 24 connected in series to the branch line 12 is disposed on the branch line 12.

In some embodiments, as shown in FIG. 1, FIG. 2c-1 to FIG. 2c-4, and FIG. 3, at least one of the branch lines 12 is connected to a sub-branch line 14, the sub-branch line 14 may be connected to one terminal that is of the branch line 12 and that is away from the bus 10, and the terminal that is of the sub-branch line 14 and that is away from the branch line 12 is used to connect to the load, and may be connected to the load by using an electrical connection terminal. In some embodiments, a third circuit protection module 26 connected in series to the sub-branch line 14 is disposed on the sub-branch line 14.

In some embodiments, as shown in FIG. 2a-1 to FIG. 2b, some loads having relatively high safety requirements or some loads having relatively low safety requirements may be connected to the branch line 12, and the fourth circuit protection module 24 may be a module with a high safety level.

In some embodiments, as shown in FIG. 2c-1 to FIG. 2c-4 and FIG. 3, some loads having relatively low safety requirements may be connected to the sub-branch line 14, and a safety level of the third circuit protection module 26 in the sub-branch line 14 is lower than that of the fourth circuit protection module 24. In this case, as described above, the fourth circuit protection module 24 is already disposed on the branch line 12, and the third circuit protection module 26 is disposed on the sub-branch line 14, to form a two-level protection circuit with different safety levels. The safety level of the circuit protection module herein may be a response time of the circuit protection module to a fault. A higher safety level indicates a shorter response time. For example, the fourth circuit protection module 24 may have a millisecond-level response time to the fault, and the third circuit protection module 26 may have a relatively long response time to the fault, for example, a second-level response time.

In some embodiments, the first circuit protection module 20 is configured to: when one of circuits on two sides of the first circuit protection module 20 has an electrical fault, enter in a state in which the circuit on the electrical fault side is not connected to a circuit on the other side. In some embodiments, the first circuit protection module 20 is specifically configured to: when a circuit on a battery side of the first circuit protection module 20 has an electrical fault, enter in a state in which the circuit on the battery side is not connected to a circuit on a bus side. In some embodiments, the first circuit protection module 20 is further specifically configured to: when a battery state in a circuit on a battery side of the first circuit protection module 20 is abnormal, enter in a state in which the circuit on the battery side is not connected to a circuit on a bus side. In some embodiments, the first circuit protection module 20 is specifically configured to: when a circuit on a bus side of the first circuit protection module 20 has an electrical fault, enter in a state in which the circuit on the bus side is not connected to a circuit on a battery side. In some embodiments, when the bus is a parallel two-way bus, the first circuit protection module on a first-way bus of the two-way bus is further specifically configured to: when the circuit on a second-way bus side has an electrical fault, and the first circuit protection module on a second-way bus is in a state in which the circuit on the second-way bus side is connected to the circuit on the battery side, enter in a state in which the circuit on the battery side is not connected to the circuit on a first-way bus side. In addition, the first circuit protection modules of the two-way bus may both be configured as above.

For ease of description, in this embodiment of this application, that the first circuit protection module 20 is in a state in which the circuit on the bus side is not connected to the circuit on the battery side is referred to as a first open-circuit state, and the first open-circuit state includes a unidirectional open circuit (that is, a disconnected state) from the side of the bus 10 to the side of the first power supply apparatus (the battery) 30. Optionally, a unidirectional connection from the side of the first power supply apparatus (the battery) 30 to the side of the bus 10 exists.

That the first circuit protection module 20 is in a state in which the circuit on the battery side is not connected to the circuit on the bus side is referred to as a second open-circuit state, and the second open-circuit state includes a unidirectional open circuit (that is, a disconnected state) from the side of the first power supply apparatus (the battery) 30 to the side of the bus 10. Optionally, a unidirectional connection from the side of the bus 10 to the side of the first power supply apparatus (the battery) 30 exists.

In some embodiments, the second circuit protection module 22 is configured to:
when one of circuits on two sides of the second circuit protection module has an electrical fault, enter in a state in which the circuit on the electrical fault side is not connected to a circuit on the other side.

In some embodiments, the second circuit protection module is specifically configured to: when a circuit on a second power supply apparatus side of the second circuit protection module has an electrical fault, enter in a state in which the circuit on the second power supply apparatus side is not connected to a circuit on the bus side. In some embodiments, the second circuit protection module is specifically configured to: when the bus side of the second circuit protection module has an electrical fault, enter in a state in which a circuit on the bus side is not connected to a circuit on a second power supply apparatus side. In some embodiments, when the bus is a parallel two-way bus, the second circuit protection module on a first-way bus in the two-way bus is further specifically configured to: when the circuit on a second-way bus side has an electrical fault, and the second circuit protection module on a second-way bus is in a state in which the circuit on the second-way bus side is connected to the circuit on the second power supply apparatus side, enter in a state in which the circuit on the second power supply apparatus side is not connected to the circuit on a first-way bus side.

For ease of description, in this embodiment of this application, that the second circuit protection module is in a state in which the circuit on the bus side is not connected to the circuit on the second power supply apparatus side is referred to as a third open-circuit state, and the third open-circuit state includes a unidirectional open circuit (that is, a disconnected state) from the side of the bus 10 to the side of the second power supply apparatus 32. Optionally, a unidirectional connection from the side of the second power supply apparatus 32 to the side of the bus 10 exists.

That the second circuit protection module is in a state in which the circuit on the second power supply apparatus side is not connected to the circuit on the bus side is referred to as a fourth open-circuit state, and the fourth open-circuit state includes a unidirectional open circuit (that is, a disconnected state) from the side of the second power supply apparatus 32 to the side of the bus 10. Optionally, a unidirectional connection from the side of the bus 10 to the side of the second power supply apparatus 32 exists.

In some embodiments, the fourth circuit protection module 24 is configured to: when a current on a side of the load connected to the branch line or a current on a combination side of the connected sub-branch line 14 has an over-current fault, enter in an open-circuit state, that is, disconnect a circuit of the connected load or the circuit of the combined circuit of the connected sub-branch line 14.

In some embodiments, the third circuit protection module 26 is configured to: when the side of the connected load has an over-current fault, enter in an open-circuit state, that is, disconnect a circuit of the connected load. In some embodiments, an active over-current protection circuit or a passive over-current protection circuit may be used.

In some embodiments, as shown in FIG. 2a-1 to FIG. 3, a battery detection module (as shown in number ⑦ in the figure) for detecting the battery state is further included. The battery detection module is configured to: when detecting that the battery state is abnormal, enable, by using the first circuit protection module, the battery and the bus to be in an open-circuit state. In some embodiments, the battery detection module may be configured to: detect a voltage, a current, an internal fault of a low-voltage battery, calculate remaining capacity and a life of the low-voltage battery, and the like.

In some embodiments, when there is a self-detection module (as shown in number ⑧ in the figure) inside the battery, when detecting a voltage, a current, and an internal fault of the low-voltage battery, the self-detection module may provide the detection result to the battery detection module, so as to implement the detection of the battery detection module. The self-detection module inside the battery may include a low-voltage battery temperature, voltage, and current sensor or detection circuit, and a low-voltage battery internal fault detection circuit.

In some embodiments, when detecting that the battery has a fault or the life of the low-voltage battery expires, the battery detection module executes a corresponding fault processing policy. For details, refer to FIG. 4d-1 and FIG. 4d-2 for description in the following. Details are not described herein.

In some embodiments, as shown in FIG. 3, a control module is further included, and is configured to: receive detection results of the first circuit protection module 20, the second circuit protection module 22, the fourth circuit protection module 24, and the third circuit protection module 26, and execute a corresponding policy based on the detection results and a corresponding preset execution logic, to enable a circuit connected to the corresponding circuit protection module to be opened. For example, a procedure recovery attempt policy or a driving-related policy is executed: intelligent driving enable prohibition, intelligent driving restriction, safe takeover/parking, a degraded mode, an alarm, assisted parking (a manual safe parking policy), and the like. The control module may upload, by using a communication port, the detection results to a vehicle control module, for example, an electronic control module (Electronic Control Unit, ECU), and the vehicle control module executes the driving-related policy. The control module may communicate with the outside by using the communication port, so that information in the control module may be configured, for example, parameters such as a load over-current safety limit, an over-voltage limit, an under-voltage limit, and an over-current limit of each circuit protection module may be configured.

In some embodiments, each circuit protection module may include a voltage or/and current sensor and an actuator based on whether an electrical signal to be detected is a current signal or a voltage signal. The actuator may be a controllable switch, such as a controllable circuit breaker, a silicon controlled circuit breaker, or a silicon controlled switch, to receive control from the control module, or may be a self-controlled switch, and directly perform control based on a result of the voltage and/or current sensor in the circuit protection module. The voltage or/and current sensor and the actuator of the circuit protection module may be integrated into one component, or may be a circuit including several discrete components. FIG. 2a-1, FIG. 2b, and FIG. 2c-1 show principle diagrams of an embodiment of a first circuit protection module and a second circuit protection module. The first circuit protection module and the second circuit protection module include two switches connected in series, and the two switches are respectively connected in parallel to diodes, and form a connection state in which anodes of the two diodes are opposite to each other. In another embodiment, the two diodes may alternatively be in a state in which cathodes are opposite to each other. In some embodiments, when the bus is a two-way bus, the two corresponding first circuit protection modules may be independent components, or may be two independent modules integrated into one component. In some embodiments, when the bus is a two-way bus, the two corresponding second circuit protection modules may be independent components, or may be two independent modules integrated into one component.

The following further describes this embodiment of this application by using first to third specific implementations shown in FIG. 2a-1 to FIG. 2c-4. For ease of description, the third specific implementation shown in FIG. 2c-1 is first described, and then the second and first specific implementations shown in FIG. 2b, FIG. 2a-1, and FIG. 2a-2 are sequentially described.

FIG. 2c-1 shows the third specific implementation of the power distribution apparatus, and a system architecture of a power distribution apparatus according to an embodiment shown in FIG. 3 is also described. As shown in FIG. 2c-1, in the specific implementation, the power distribution apparatus includes first circuit protection modules on the side of the battery on the two-way bus, and the first circuit protection module includes a bidirectional switch (that is, an actuator) including a first switch ① and a second switch ②, which are respectively connected in parallel to diodes, and form a connection state in which anodes of the two diodes opposite to each other. The first switch ① is configured to perform over/under-voltage/over-current fault protection on a power distribution line, and the second switch ② is configured to perform over-current fault protection on a side of a low-voltage battery. When it is detected that a circuit on one way of the bus has an over/under-voltage fault or an over-current fault, the faulty circuit may be quickly cut off by using the first switch ① in the first circuit protection module on this way of the bus, to ensure normal power supply of a low-voltage battery ⑨ to a load of a circuit on the other bus; and when it is detected that one side of the battery ⑨ has a short-circuit or over-current fault (for example, the fault is detected by the self-detection module ⑧ for detecting an internal fault of the battery and a detection result is provided to the battery detection module ⑦), the second switches ② in the two-way bus may be simultaneously switched off, to quickly cut off the fault on the side of the battery 09 , thereby ensuring that the power distribution system on the two-way bus operates normally. In some implementations, as shown in FIG. 2c-2, when the fault of the low-voltage battery ⑨ does not cause a relatively large voltage drop of the low-voltage battery, if an over-current fault or a short-circuit fault may be controlled at a quite low level through quality control, the first circuit protection module may not include a related circuit of the second switch (2). To be specific, it is considered that the battery fault does not affect the bus. Therefore, the related circuit of the second switch ② is not disposed.

In the third specific implementation, the fourth circuit protection module on the branch line is an over-current protection circuit ④, the third circuit protection module on the sub-branch line is an over-current protection circuit (3), and the circuit protection modules on the branch line and the sub-branch line form a two-level low-voltage power distribution over-current protection system. The load connected to the branch line may be a safe load, and is equipped with a fourth circuit protection module with high safety and high costs. The load connected to the sub-branch line may be a conventional load, and may share one fourth circuit protection module. In addition, each conventional load is equipped with a third circuit protection module. The safety load herein means a load that has a higher safety requirement than a common load. Compared with the third circuit protection module, the fourth circuit protection module has higher safety. For example, a fault response time (for example, a disconnection time during a fault) is shorter, and fault threshold response precision is higher.

When an over-current fault of the safe load is detected, a circuit of the faulty load is quickly disconnected by using the connected over-current protection circuit ④; when a conventional load has an over-current fault, a circuit of the faulty load is disconnected by using the connected over-current protection circuit ③; and when it is detected that an entire combined circuit of a conventional load has an over-current fault, a power distribution line of the conventional load is quickly disconnected by using the over-current protection circuit ④ of the safe load.

The second circuit protection module includes a bidirectional switch (that is, an actuator), including a third switch (5) and a fourth switch ⑥, which are respectively connected in parallel to diodes, and form a connection state in which anodes of the two diodes are opposite to each other. The third switch (5) is used for over/under-voltage/over-current fault protection of the circuit on the bus, and the fourth switch (6) is used for over/under-voltage/over-current fault protection on a side of a DC-DC/generator 10 (that is, the second power supply apparatus side). When it is detected that a circuit on one way of the bus has an over/under-voltage fault or an over-current fault, the faulty circuit may be quickly cut off by using the third switch ⑤ in the second circuit protection module on this way of the bus. When it is detected that the second power supply apparatus side is under-voltage/over-current, for example, the DC-DC or the generator has a fault, the faulty circuit is quickly cut off by using the fourth switch (6). In addition, in some cases, if the side of the DC/DC ⑩ does not need to supply power, as shown in FIG. 2c-3, the third switches ⑤ on the two ways may be canceled, or only the third switch ⑤ on one way is reserved, as shown in FIG. 2c-4. When it is detected that one way of the bus in the two-way bus has an over-current fault, a faulty power distribution line may be opened and isolated by using the first switch ① on the same bus and the fourth switch ⑥ on the other bus, so that the faulty bus does not affect the other way of the bus and the battery.

FIG. 2b shows a second specific implementation of the power distribution apparatus. Compared with the third specific implementation shown in FIG. 2c-1, the sub-branch line part is canceled, that is, the two-level conventional over-current protection circuit of the conventional load is canceled, and all loads use the fourth circuit protection module. The second specific implementation of the power distribution apparatus shown in FIG. 2b can meet a low-voltage power supply requirement for operation under faults (Fail-Operational) required by an ASIL D level of a two-way power distribution system. Similarly, corresponding to the solution of FIG. 2c-2, FIG. 2b may not include a related circuit of the second switch ②, and similarly, corresponding to the solutions of FIG. 2c-3 and FIG. 2c-4, in FIG. 2b, the third switches (5) on two ways may be canceled, or only the third switch ⑤ on one way is reserved, as shown in FIG. 2c-4. Details are not described herein again.

FIG. 2a-1 shows a first specific implementation of the power distribution apparatus. Compared with the second specific implementation shown in FIG. 2b, the bus is a single-way bus, and a redundant bus is canceled, so that a low-voltage power supply requirement for operation under faults (Fail-Operational) of an ASIL B level of the power distribution apparatus including the single-way bus can be met. In addition, in some specific implementations, when the power distribution apparatus including the single-way bus is used, as shown in FIG. 2a-2, the first switch ① may not be disposed in the first circuit protection module, and the third switch ⑤ may not be disposed in the second circuit protection module. To be specific, when the bus has a fault, an alarm is directly issued and a corresponding processing procedure is performed on the fault, and the first switch ① and the third switch ⑤ are not used in this circuit, to limit impact of the bus fault on the second power supply apparatus and the battery.

In the second and third specific implementations of the power distribution apparatus, in a specific implementation of the circuit, the circuits of the first switches ① and the second switches ② of the two-way bus may be in one circuit module in which the circuits are kept independent of each other, or may be in two independent circuit modules. The circuits of the third switches (5) and the fourth switches ⑥ of the two-way bus may be in one circuit module in which the circuits are kept independent of each other, or may be in two independent circuit modules. In addition, if the side of the low-voltage battery has no over-current fault, the second switch ② may not be disposed in the first circuit protection module (refer to FIG. 2c-2). In addition, in some cases, the third switch ⑤ may not be disposed in the second circuit protection module (refer to FIG. 2c-3), or only one of the two second circuit protection modules on the two-way bus is provided with the third switch ⑤ (refer to FIG. 2c-4). This does not affect implementation of redundant power supply safety. When it is detected that one way of the bus has an over-current fault, a faulty power distribution line may be opened and isolated on the corresponding DC-DC side by using the fourth switch ⑥ on the other bus.

In addition, circuits related to some of the foregoing switches may be shared. For example, a current detection circuit of the first switch ① and the second switch ② may be shared. For another example, a current detection circuit of the third switch ⑤ and the fourth switch (6) may be shared.

The foregoing specific implementations may be applied to a vehicle equipped with an advanced intelligent driving system. For example, FIG. 3 is a schematic diagram of a specific implementation of a power distribution apparatus of a vehicle when a system architecture of an embodiment of the power distribution apparatus in this application is applied to the vehicle. In the figure, dotted arrows represent signal flows.

When the first power supply apparatus connected to the power distribution apparatus is a low-voltage battery, a possible fault includes one of the following: low-voltage battery under-voltage; an over-current/short-circuit fault on a low-voltage battery side; intermittent, discontinuous, or even open-circuit of an output voltage on the low-voltage battery side; life of the low-voltage battery expires; battery capacity attenuation; a battery charging failure; and a high battery temperature. The fault information may be detected by the foregoing battery detection module, or some fault information may be provided by the self-detection module of the battery to the battery detection module. An electrical signal (such as a voltage or current signal) output by the low-voltage battery to the power distribution apparatus may be detected by the current or voltage sensor in the first protection circuit.

When the second power supply apparatus connected to the power distribution apparatus may be a power battery (that is, a high-voltage battery) or a circuit including a generator and a DC-DC, a possible fault includes one of the following: a fault on a side of the DC-DC or the generator: over-voltage or under-voltage of an output voltage of the DC-DC or the generator; a circuit on the side of the DC-DC or the generator has an over-current fault or a short-circuit fault; and the output voltage of the DC-DC or the generator is intermittent, discontinuous, or even open circuit. An electrical signal (such as a voltage or current signal) output from the DC-DC to the power distribution apparatus may be detected by a current or voltage sensor in the second protection circuit; an electrical signal between the power battery or the generator and the DC-DC may be detected by a sensor disposed in the segment of circuit; and when the power battery and the generator have a self-detection module, respective state information may be provided.

A fault related to a load circuit connected to the power distribution apparatus includes one of the following: the load circuit (corresponding to the branch line or the sub-branch line) is over-current or short-circuited; power supply to the load circuit (corresponding to the branch line or the sub-branch line) is discontinuous, intermittent, or even disconnected; and a combined circuit of the sub-branch line (corresponding to the branch line) is over-current or short-circuited. When the faults are faults on the corresponding branch line, the faults may be detected by a current sensor in the third protection circuit. When the faults are faults on the corresponding sub-branch line, the faults may be detected by a current sensor in the fourth protection circuit.

The bus fault in the power distribution apparatus includes one of the following: short circuit, electric leakage, or open circuit of the bus. The fault may be detected by the current or voltage sensor in the first protection circuit or the second protection circuit.

The control module may have one of the following functions: by collecting collected voltage or current and protection circuit state (whether the protection circuit is in a disconnected state) information provided by each protection circuit, monitoring a current or voltage condition of each line (including the bus, the branch line, or the sub-branch line) in real time, and once an over-current or over/under-voltage fault is found, controlling a corresponding protection circuit to disconnect a faulty circuit based on pre-measurement, so as to disconnect the first power supply apparatus, the second power supply apparatus, or a corresponding load. In this specific implementation, the control module uses dual control modules (for example, a control module A and a control module B shown in FIG. 3), and real-time monitoring of a fault and a state is also performed between the dual control modules (for example, monitoring is implemented by using a heartbeat), and if it is found that a fault that cannot be processed (for example, out-of-order or restart) occurs on the other party, a preset fault processing policy of the control module is executed. In this specific implementation, the control module further transmits the obtained fault and state of the power distribution apparatus, load information, and the like to the related ECU by using a communication bus, for example, a CAN bus, and also supports configuring, by using the CAN bus, parameters such as a load over-current safety limit in the control module, and an over-voltage limit, an under-voltage limit, and an over-current limit in the protection circuit.

Corresponding to the specific implementations shown in FIG. 2a-1 to FIG. 2c-4, as shown in FIG. 3, the fault information may be reported to the control module, and the control module performs corresponding control and fault processing based on a preset control logic. FIG. 4a-1 and FIG. 4a-2 to FIG. 4e-1 and FIG. 4e-2 show several embodiments of the control logic, where content in a dashed line box is a main control logic. Descriptions are provided below.

FIG. 4a-1 and FIG. 4a-2 are a flowchart of DC-DC side fault control corresponding to a specific implementation of this application, and may be applied to the embodiments shown in FIG. 2a-1, FIG. 2a-2, FIG. 2b, FIG. 2c-1, and FIG. 2c-2. It can be learned that, when it is detected that the circuit on the second power supply apparatus side has an electrical fault, for example, the DC-DC side has an over-voltage or under-voltage fault, or has an over-current or open-circuit fault, a control logic on the power distribution apparatus side is as follows: For each way of the bus, the fourth switch ⑥ of the second circuit protection module is controlled to be switched off, so that the DC-DC side does not supply power to the bus, and when the fourth switch ⑥ cannot be switched off, the first switch ① of the first circuit protection module on the same bus is controlled to be switched off, so as to cut off unidirectional electrical transmission, by using the bus, from the DC-DC side to the battery side or the other bus, thereby protecting the battery or the bus on the other side from being affected by the fault on the DC-DC side. After the fourth switch ⑥ is normally switched off, the second switch ② of the first circuit protection module on the same bus may be controlled to be in a closed state, so that the battery supplies power to the bus normally.

In addition, the fault is reported to execute a control logic of the vehicle, and a second power supply apparatus failure policy is mainly executed.

For the executed second power supply apparatus failure policy, specific policy content is not limited in this embodiment of this application, and a required policy may be preconfigured. For example, due to a failure of the second power supply apparatus, currently, power supply of only the low-voltage battery, and a power limitation and a power supply duration limitation of the low-voltage battery may all be used as a basis for formulating the failure policy. FIG. 5a shows an example of the failure policy herein. An executed policy in this example includes: when it is determined that each load is in a safe power limiting condition, a safe power limiting policy of the vehicle is executed. To be specific, because the DC-DC side has a fault, only the battery side supplies power to the bus, limiting power of each load connected to the bus; or when the vehicle is not in the safe power limiting condition, it is determined whether the vehicle is already in an intelligent driving state. If the vehicle is already in the intelligent driving state, manual takeover is triggered, and a parking suggestion may be provided, or an assisted safe parking mode is executed, so that the vehicle stops on the roadside without affecting another vehicle, a pedestrian, or the like, or enters a degraded mode of intelligent driving (for example, from a level L4 to a level L3 or L2). If the vehicle is not in the intelligent driving state, intelligent driving may be prohibited from being enabled, or a load power limiting policy is executed, or a manual driving mode is executed, and a parking suggestion may be provided.

FIG. 4b-1 and FIG. 4b-2 are a flowchart of branch line load circuit fault control corresponding to a specific implementation of this application, and may be applied to the embodiments shown in FIG. 2a-1 and FIG. 2b. It can be learned that, when a fault occurs on the branch line, for example, the side of the load connected to the branch line has an electrical fault, or the combination side of the sub-branch line connected to the branch line has an electrical fault, where the electrical load fault herein may be load over-current or the like, a control logic on the power distribution apparatus side is as follows: The fourth circuit protection module, for example, the over-current protection circuit ④, disconnects the faulty load and issues a fault alarm. In addition, when it is determined that the over-current protection circuit ④ cannot disconnect the faulty circuit, the first switch ① of the first circuit protection module and the third switch ⑤ in the second circuit protection module on the same bus are switched off, so that unidirectional electrical transmission from the faulty load to the battery side, unidirectional electrical transmission from the faulty load to the DC/DC side, and unidirectional electrical transmission from the faulty load to the side of the other bus are isolated, thereby preventing the faulty bus from affecting the battery side, the DC/DC side, and the other bus, and executing a power distribution processing policy of a single-way bus (when the bus is the two-way bus corresponding to FIG. 2b).

In addition, for the fault reporting, in a case in which the over-current protection circuit ④ is controlled to be disconnected, a one-way branch line failure policy of the vehicle may be executed. When the first switch ① of the first circuit protection module and the third switch ⑤ in the second circuit protection module on the same bus are switched off, a one-way power distribution failure policy of the vehicle is executed.

For the executed one-way branch line failure policy, specific policy content is not limited in this embodiment of this application, and a required policy may be preconfigured. For example, due to a failure of a one-way branch line, whether a load on the branch line affects autonomous driving needs to be considered. For another example, for some loads that are powered by the dual bus, when the one-way branch line connected to the load happens to fail, two-way power supply to the load changes to one-way power supply. In this case, it needs to be considered that power of the load is limited. All these may be used as a basis for formulating the failure policy. Herein, FIG. 5b shows an example of executing the one-way branch line failure policy, including: It is determined whether the fault affects intelligent driving; if the fault affects intelligent driving, a manual driving mode is executed, and a driver takes over driving; and otherwise, it is further determined whether intelligent driving is enabled. If the vehicle is already in an intelligent driving state, manual takeover is triggered, and a parking suggestion may be provided, or an assisted safe parking mode is executed, or the vehicle enters a degraded mode of intelligent driving. If the vehicle is not in the intelligent driving state, intelligent driving may be prohibited from being enabled, or a power limiting mode of a load (herein the load is the load connected to the two-way bus) connected to the branch line is executed.

For the executed one-way power distribution failure policy, specific policy content is not limited in this embodiment of this application, and a required policy may be preconfigured. For example, due to a power distribution failure of one way of the bus, whether each load on the bus affects autonomous driving needs to be considered. For another example, for some loads that are powered by the dual bus, two-way power supply to the load changes to one-way power supply. In this case, it needs to be considered that power of the load is limited. All these may be used as a basis for formulating the failure policy. For example, the executed one-way power distribution failure policy may include determining whether a load of a failed bus affects intelligent driving, and executing a manual takeover mode when the load affects intelligent driving, or entering a degraded mode of intelligent driving, or a power limiting mode of a connected load (herein the load is the load connected to the two-way bus).

FIG. 4c-1 and FIG. 4c-2 are a flowchart of two-level load circuit fault control corresponding to a specific implementation of this application, and may be applied to the embodiments shown in FIG. 2c-1 to FIG. 2c-4. Two levels correspond to a structure in which the sub-branch line is disposed on the branch line. A main difference from FIG. 4b-1 and FIG. 4b-2 lies in that, when the load on the sub-branch line has a fault, for example, is over-current, a control logic on the power distribution apparatus side is as follows: A load fault alarm is issued, and the corresponding third circuit protection module, for example, the over-current protection circuit ③ is disconnected, and if the branch line cannot be disconnected by using the over-current protection circuit ③, the fourth circuit protection module, for example, the over-current protection circuit (4), on the branch line on which the sub-branch line is located is controlled to disconnect the branch line. In this case, the one-way branch line failure policy may be executed. If a sub-branch line load general circuit, that is, a branch line on which the sub-branch line is located, is over-current, the fourth circuit protection module, for example, the over-current protection circuit ④, on the branch line on which the sub-branch line is located is controlled to disconnect the branch line. In this case, the one-way branch line failure policy may be executed. For another control logic and a vehicle control logic, refer to the example shown in FIG. 4b-1 and FIG. 4b-2. Details are not described again.

FIG. 4d-1 and FIG. 4d-2 are a flowchart of low-voltage battery side fault control corresponding to a specific implementation of this application, and may be applied to the embodiments shown in FIG. 2a-1, FIG. 2b, and FIG. 2c-1 to FIG. 2c-4. It may be learned that, after it is determined that the battery side has a fault, for example, an electrical fault of the circuit on the battery side, an abnormal battery state, or an over-temperature fault of the battery, a control logic on the power distribution apparatus side is as follows: When it is determined that the fault is a recoverable fault, the second switch ② of the first circuit protection module is controlled to be in a switched-off state, and after the battery fault meets a recovery condition, the second switch ② is enabled to be in a closed state. When the fault is an unrecoverable fault, a low-voltage battery failure policy of the vehicle is executed, and if the fault is not an open-circuit fault, the second switch ② of the first circuit protection module is controlled to be in a switched-off state, and when it is detected that the second switch ② cannot be switched off, the third switch ⑤ in the second circuit protection module on the same bus side is controlled to be switched off, so as to cut off unidirectional electrical transmission, by using the bus, from the battery side to the DC-DC side or the other bus, thereby protecting the DC-DC side or the bus on the other side from being affected by the fault of the battery, and executing the low-voltage battery failure policy and the one-way power distribution (that is, one-way bus) failure policy of the vehicle.

For the executed low-voltage battery failure policy and the one-way power distribution failure policy of the vehicle, specific policy content is not limited in this embodiment of this application, and required policies may be preconfigured. For example, due to a failure of one-way bus power distribution and a failure of the low-voltage battery, a control policy of the vehicle may be formulated by considering factors that need to be considered for the one-way power distribution failure policy and factors that need to be considered for the low-voltage battery failure policy. For example, a degraded mode of intelligent driving or a manual takeover mode is executed.

FIG. 4e-1 and FIG. 4e-2 are a flowchart of single-way power distribution circuit bus fault control corresponding to a specific implementation of this application, and may be applied to the embodiments shown in FIG. 2b, FIG. 2c-1, and FIG. 2c-2. It can be learned that, when one way of the dual bus has a fault, a control logic on the power distribution apparatus side is as follows: The first switch ① of the first circuit protection module and the third switch ⑤ in the second circuit protection module on the faulty bus are controlled to be switched off, to isolate unidirectional electrical transmission from the faulty bus to the battery side, isolate unidirectional electrical transmission from the faulty bus to the DC/DC side, and isolate unidirectional electrical transmission from the faulty load bus to the side of the other bus, thereby preventing the faulty bus from affecting the battery side, the DC/DC side, and the other bus, and executing the one-way power distribution (that is, one-way bus) failure policy of the vehicle. If the first switch ① cannot be switched off, a fault alarm is issued, and the second switch ② of the first circuit protection module on the other bus is controlled to be turned off, to avoid affecting the other bus. In this case, power supply of the other bus is supplied only by the DC/DC side, and the low-voltage battery failure policy and the one-way power distribution (that is, one-way bus) failure policy of the vehicle are executed. If the third switch ⑤ cannot be switched off, a fault alarm is issued, and the fourth switch ⑥ of the second circuit protection module on the other bus is controlled to be turned off, to avoid affecting the other bus. In this case, power supply of the other bus is supplied only by the battery, and the second power supply apparatus failure policy and the one-way power distribution (that is, one-way bus) failure policy of the vehicle are executed.

For the executed low-voltage battery failure policy of the vehicle, and the second power supply apparatus failure policy and the one-way power distribution failure policy of the vehicle, specific policy content is not limited in this embodiment of this application, and required policies may be preconfigured. For example, the control policy of the vehicle is formulated by considering factors that need to be considered for the low-voltage battery failure policy. For example, a degraded mode of intelligent driving or a manual takeover mode is executed.

For another example, when the second power supply apparatus failure policy and the one-way power distribution failure policy of the vehicle are formulated, a corresponding control policy may be formulated with reference to both the foregoing second power supply apparatus failure policy and one-way power distribution failure policy.

A person of ordinary skill in the art may be aware that, in combination with the examples described in embodiments disclosed in this specification, units and algorithm steps can be implemented by electronic hardware or a combination of computer software and electronic hardware. For example, the embodiments corresponding to FIG. 4a-1 and FIG. 4a-2 to FIG. 4e-1 and FIG. 4e-2 may all be implemented by a combination of a program or an instruction and electronic hardware. For example, a control unit of the vehicle may store a corresponding program and/or instruction, to implement the procedures in the embodiments or some steps in the procedures. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

1. A power distribution apparatus, comprising a bus, wherein the bus comprises a first terminal and a second terminal, a branch line is disposed between the first terminal and the second terminal of the bus, and the branch line is configured to connect a load;
the first terminal of the bus is configured to connect to a battery, and the second terminal is configured to connect to a second power supply apparatus;
the first terminal of the bus is connected to a first circuit protection module in series; and
the first circuit protection module is configured to: when one of circuits on two sides of the first circuit protection module has an electrical fault, enter in a state in which the circuit on the electrical fault side is not connected to a circuit on the other side.

2. The apparatus according to claim 1, wherein the first circuit protection module is specifically configured to: when a circuit on a battery side of the first circuit protection module has an electrical fault, enter in a state in which the circuit on the battery side is not connected to a circuit on a bus side.

3. The apparatus according to claim 1, wherein the first circuit protection module is specifically configured to: when a battery state in a circuit on a battery side of the first circuit protection module is abnormal, enter in a state in which the circuit on the battery side is not connected to a circuit on a bus side.

4. The apparatus according to claim 1, wherein the first circuit protection module is specifically configured to: when a circuit on a bus side of the first circuit protection module has an electrical fault, enter in a state in which the circuit on the bus side is not connected to a circuit on a battery side.

5. The apparatus according to any one of claims 1 to 4, wherein the bus is a parallel two-way bus, and the first terminal of each way of the bus is connected to the first circuit protection module in series; and
the first circuit protection module on the two-way bus is specifically configured to: when the circuit on the battery side of the first circuit protection module on the two-way bus has an electrical fault or the battery state is abnormal, enter in a state in which the circuit on the battery side is not connected to the circuit on the bus side.

6. The apparatus according to claim 5, wherein the first circuit protection module on a first-way bus of the two-way bus is further specifically configured to: when a circuit on a second-way bus side has an electrical fault, and the first circuit protection module on a second-way bus is in a state in which the circuit on the second-way bus side is connected to the circuit on the battery side, enter in a state in which the circuit on the battery side is not connected to a circuit on a first-way bus side.

7. The apparatus according to any one of claims 1 to 6, wherein a sub-branch line is disposed on at least one branch line, and the sub-branch line is configured to connect to the load.

8. The apparatus according to claim 7, wherein a third circuit protection module connected in series to the sub-branch line is disposed on the sub-branch line; and
the third circuit protection module is configured to: when a side of the load connected to the sub-branch line has an electrical fault, enter in a state in which the sub-branch line is open-circuit.

9. The apparatus according to claim 7 or 8, wherein a fourth circuit protection module connected in series to the branch line is disposed on the branch line; and
for the branch line connected to the load, the fourth circuit protection module disposed on the branch line is configured to: when the side of the load connected to the branch line has an electrical fault, enter in a state in which the branch line is open-circuit, or
for the branch line connected to the sub-branch line, the fourth circuit protection module disposed on the branch line is configured to: when a combination side of the sub-branch line connected to the branch line has an electrical fault, enter in a state in which the branch line is open-circuit.

10. The apparatus according to claim 9, wherein a response time of the fourth circuit protection module to the electrical fault is shorter than a response time of the third circuit protection module to the electrical fault.

11. The apparatus according to any one of claims 1 to 10, wherein the second terminal of the bus is connected to a second circuit protection module in series;
the second circuit protection module is configured to: when one of circuits on two sides of the second circuit protection module has an electrical fault, enter in a state in which the circuit on the electrical fault side is not connected to a circuit on the other side; and
the electrical fault comprises at least one of the following: an over-current fault, an over-voltage fault, and an under-voltage fault.

12. The apparatus according to claim 11, wherein the second circuit protection module is specifically configured to: when a circuit on a second power supply apparatus side of the second circuit protection module has an electrical fault, enter in a state in which the circuit on the second power supply apparatus side is not connected to a circuit on the bus side.

13. The apparatus according to claim 11, wherein the second circuit protection module is specifically configured to: when the bus side of the second circuit protection module has an electrical fault, enter in a state in which a circuit on the bus side is not connected to a circuit on a second power supply apparatus side.

14. The apparatus according to any one of claims 11 to 13, wherein the bus is the parallel two-way bus, and one terminal that is of each way of the bus and that is used to connect to the second power supply apparatus is connected to the second circuit protection module in series; and the second circuit protection module on the two-way bus is specifically configured to: when the circuit on the second power supply apparatus side of the second circuit protection module on the two-way bus has an electrical fault, enter in a state in which the circuit on the second power supply apparatus side is not connected to the circuit on the bus side.

15. The apparatus according to claim 14, wherein the second circuit protection module on a first-way bus in the two-way bus is further specifically configured to: when the circuit on a side of a second-way bus in the two-way bus has an electrical fault, and the second circuit protection module on the second-way bus is in a state in which the circuit on the second-way bus side is connected to the circuit on the second power supply apparatus side, enter in a state in which the circuit on the second power supply apparatus side is not connected to the circuit on a side of the first-way bus.

16. The apparatus according to any one of claims 1 to 15, further comprising a control module, configured to: receive information about the electrical fault and/or information about the abnormal battery state, and control, based on the information, at least one of the circuit protection modules to enable the circuit protection module to be in the disconnected state based on a configuration of the circuit protection module.

17. The apparatus according to claim 16, wherein when the bus is the parallel two-way bus, the control module is two control modules that communicate with each other;
the information that is about each electrical fault and that is received by a first control module in the two control modules, and the circuit protection module controlled by the first control module correspond to the first-way bus in the two-way bus, or a branch line connected to the first-way bus, or a sub-branch line connected to the branch line; and
the information that is about each electrical fault and that is received by a second control module, and the circuit protection module controlled by the second control module correspond to the second-way bus, or a branch line connected to the second-way bus, or a sub-branch line connected to the branch line.

18. A vehicle, comprising the power distribution apparatus according to any one of claims 1 to 17.

19. A fault processing method, applied to a power distribution apparatus, wherein the power distribution apparatus comprises a bus, the bus comprises a first terminal and a second terminal, the first terminal of the bus is connected to a battery, and the first terminal of the bus is connected to a first circuit protection module in series; and
the method comprises: when it is detected that one of circuits on two sides of the first circuit protection module has an electrical fault, enabling the first circuit protection module to be in a first state, wherein the first state comprises that the first circuit protection module is in a state in which the circuit on the electrical fault side is not connected to a circuit on the other side.

20. The fault processing method according to claim 19, wherein the second terminal of the bus is connected to a second power supply apparatus, and the second terminal of the bus is connected to a second circuit protection module in series; and the method specifically comprises:
when a first fault is detected, enabling the first circuit protection module to be in a second open-circuit state; and
when the first circuit protection module cannot be in the second open-circuit state, enabling the second circuit protection module on the bus on which the first circuit protection module is located to be in a third open-circuit state, wherein
the first fault comprises at least one of the following: an electrical fault of a circuit on a battery side, an abnormal state of the battery, and an over-temperature fault of the battery;
the second open-circuit state comprises: the first circuit protection module is in a state in which the circuit on the battery side of the first circuit protection module is not connected to a circuit on a bus side; and
the third open-circuit state comprises: the second circuit protection module is in a state in which a circuit on the side of the bus of the second circuit protection module is not connected to a circuit on a second power supply apparatus side.

21. The fault processing method according to claim 20, further comprising:
when the first circuit protection module is in the second open-circuit state, executing a first failure policy, wherein the first failure policy comprises a low-voltage battery failure policy of a vehicle; or
when the second circuit protection module on the bus on which the first circuit protection module is located is in the third open-circuit state, executing a second failure policy, wherein the second failure policy comprises the low-voltage battery failure policy and a one-way power distribution failure policy of the vehicle.

22. The fault processing method according to claim 20, further comprising:
after the first circuit protection module is enabled to be in the second open-circuit state, after it is detected that the first fault is recovered, enabling the first circuit protection module to be in a first connected state, wherein
the first connected state comprises: the first circuit protection module is in a state in which the circuit on the battery side of the first circuit protection module is connected to the circuit on the bus side.

23. The fault processing method according to claim 19, wherein the second terminal of the bus is connected to a second power supply apparatus, and the second terminal of the bus is connected to a second circuit protection module in series; and the method specifically comprises:
when it is detected that a circuit on a second power supply apparatus side has an electrical fault, enabling the second circuit protection module to be in a fourth open-circuit state; and
when the second circuit protection module cannot be in the fourth open-circuit state, enabling the first circuit protection module on the bus on which the second circuit protection module is located to be in the first open-circuit state, wherein
the first open-circuit state comprises: the first circuit protection module is in a state in which a circuit on a bus side of the first circuit protection module is not connected to a circuit on a battery side; and
the fourth open-circuit state comprises: the second circuit protection module is in a state in which the circuit on the second power supply apparatus side of the second circuit protection module is not connected to the circuit on the bus side.

24. The fault processing method according to claim 23, further comprising:
when the second circuit protection module is in the fourth open-circuit state, executing a third failure policy, wherein the third failure policy comprises a second power supply apparatus failure policy of a vehicle; or
when the first circuit protection module on the bus on which the second circuit protection module is located is in the first open-circuit state, executing a fourth failure policy, wherein the fourth failure policy comprises the second power supply apparatus failure policy and a one-way power distribution failure policy of the vehicle.

25. The fault processing method according to claim 23, wherein after the enabling the second circuit protection module to be in a fourth open-circuit state, the method further comprises:
enabling the first circuit protection module on the bus on which the second circuit protection module is located to be in the first connected state, wherein
the first connected state comprises: the first circuit protection module is in a state in which the circuit on the battery side of the first circuit protection module is connected to the circuit on the bus side.

26. The fault processing method according to claim 19, wherein the second terminal of the bus is connected to a second power supply apparatus, and the second terminal of the bus is connected to a second circuit protection module in series; and a branch line is disposed between the first terminal and the second terminal of the bus, and the branch line is connected to a fourth circuit protection module in series; and
the method specifically comprises:
when a second fault is detected, enabling the fourth circuit protection module to be in an open-circuit state; and
when the fourth circuit protection module cannot be in the open-circuit state, enabling the first circuit protection module on the bus on which the branch line on which the fourth circuit protection module is disposed is located to be in the first open-circuit state, and enabling the second circuit protection module to be in a third open-circuit state, wherein
the second fault comprises at least one of the following: an electrical fault on a side of a load connected to the branch line, and an electrical fault on a combination side of a sub-branch line connected to the branch line.

27. The fault processing method according to claim 26, further comprising:
when the fourth circuit protection module is in the open-circuit state, executing a fifth failure policy, wherein the fifth failure policy comprises a one-way branch line failure policy; or
when the first circuit protection module on the bus on which the branch line is located is in the first open-circuit state, and the second circuit protection module on the bus on which the branch line is located is in a third open-circuit state, executing a sixth failure policy, wherein the sixth failure policy comprises a one-way power distribution failure policy of the vehicle.

28. The fault processing method according to claim 19, wherein the second terminal of the bus is connected to a second power supply apparatus, and the second terminal of the bus is connected to a second circuit protection module in series, wherein
a branch line is disposed between the first terminal and the second terminal of the bus, the branch line is connected to a fourth circuit protection module in series, a sub-branch line is disposed on the branch line, and the sub-branch line is connected to a third circuit protection module in series; and
the method specifically comprises:
when it is detected that a side of a load connected to the sub-branch line has an electrical fault, enabling the third circuit protection module to be in an open-circuit state;
when the third circuit protection module cannot be in the open-circuit state, enabling the fourth circuit protection module on the branch line on which the sub-branch line is located to be in an open-circuit state; and
when the fourth circuit protection module cannot be in the open-circuit state, enabling the first circuit protection module on the bus on which the branch line is located to be in the first open-circuit state, and enabling the second circuit protection module to be in a third open-circuit state.

29. The fault processing method according to claim 28, further comprising:
when the fourth circuit protection module is in the open-circuit state, executing a fifth failure policy, wherein the fifth failure policy comprises a one-way branch line failure policy; or
when the first circuit protection module on the bus on which the branch line is located is in the first open-circuit state, and the second circuit protection module on the bus on which the branch line is located is in the third open-circuit state, executing a sixth failure policy, wherein the sixth failure policy comprises a one-way power distribution failure policy of a vehicle.

30. The fault processing method according to claim 19, wherein the second terminal of the bus is connected to a second power supply apparatus, and the second terminal of the bus is connected to a second circuit protection module in series; and the method specifically comprises:
when it is detected that one way of the bus has a fault, enabling the first circuit protection module on the faulty bus to be in the first open-circuit state, and enabling the second circuit protection module on the faulty bus to be in the third open-circuit state; and
when the first circuit protection module cannot be in the first open-circuit state, enabling the first circuit protection module on the other way of the bus to be in a second open-circuit state, or when the second circuit protection module cannot be in the third open-circuit state, enabling the second circuit protection module on the other way of the bus to be in a fourth open-circuit state.

31. The fault processing method according to claim 30, wherein
when the first circuit protection module is in the first open-circuit state, and the second circuit protection module is in the third open-circuit state, executing a one-way power distribution failure policy of a vehicle; or
when the first circuit protection module cannot be in the first open-circuit state, and the first circuit protection module on the other way of the bus is in the second open-circuit state, executing a low-voltage battery failure policy and the one-way power distribution failure policy of the vehicle; or
when the second circuit protection module cannot be in the third open-circuit state, and the second circuit protection module on the other way of the bus is in the fourth open-circuit state, executing a second power supply apparatus failure policy and the one-way power distribution failure policy of the vehicle.

32. A readable storage medium, wherein the readable storage medium stores a program or an instruction, and when the program or the instruction is executed, the method according to any one of claims 19 to 31 is implemented.
